(19) 

Europäisches Patentamt  
European Patent Office  
Office européen des brevets

(11) **EP 4 756 714 A1**

(12) **EUROPEAN PATENT APPLICATION**  
published in accordance with Art. 153(4) EPC

(43) Date of publication:  
**10.06.2026 Bulletin 2026/24**

(21) Application number: **24861740.9**

(22) Date of filing: **02.08.2024**

(51) International Patent Classification (IPC):  
*G06T 7/207 (2017.01)*

(52) Cooperative Patent Classification (CPC):  
**G06T 7/207; G06T 7/285; H04N 19/51**

(86) International application number:  
**PCT/CN2024/109457**

(87) International publication number:  
**WO 2025/050895 (13.03.2025 Gazette 2025/11)**

(84) Designated Contracting States:  
**AL AT BE BG CH CY CZ DE DK EE ES FI FR GB GR HR HU IE IS IT LI LT LU LV MC ME MK MT NL NO PL PT RO RS SE SI SK SM TR**  
Designated Extension States:  
**BA**  
Designated Validation States:  
**GE KH MA MD TN**

(30) Priority: **06.09.2023 CN 202311161813**

(71) Applicant: **Honor Device Co., Ltd.**  
**Shenzhen, Guangdong 518040 (CN)**

(72) Inventors:  
• **KUANG, Qi**  
  **Shenzhen, Guangdong 518040 (CN)**  
• **XIAO, Yuwei**  
  **Shenzhen, Guangdong 518040 (CN)**  
• **ZHANG, Kaiwen**  
  **Shenzhen, Guangdong 518040 (CN)**

(74) Representative: **Gill Jennings & Every LLP**  
**The Broadgate Tower**  
**20 Primrose Street**  
**London EC2A 2ES (GB)**

(54) **IMAGE MOTION ESTIMATION METHOD AND RELATED APPARATUS**

(57) This application provides an image motion estimation method and a related apparatus. An electronic device may intercept rendering instructions of an application for image frames, obtain related resources of the image frames based on the rendering instructions, and combine an optical flow motion estimation method and a 3D playfield motion estimation method to perform motion estimation on two adjacent image frames, to determine motion vector information between the two adjacent image frames. In this way, the motion estimation effect between the two adjacent image frames can be improved.

FIG. 4

EP 4 756 714 A1

## Description

This application claims priority to Chinese Patent Application No. 202311161813.4, entitled "IMAGE MOTION ESTIMATION METHOD AND RELATED APPARATUS", and filed with the China National Intellectual Property Administration on September 06, 2023, which is incorporated herein by reference in its entirety.

## TECHNICAL FIELD

This application relates to the field of image processing technologies, and in particular, to an image motion estimation method and a related apparatus.

## BACKGROUND

Rapid development of mobile terminals and the mobile Internet brings great convenience to people's life, and applications such as games and videos have become important manners for people to work, take leisure, and entertain. To improve the image fluency of an application such as a game or a video, motion estimation needs to be performed on a raw image frame, to obtain motion information. Then, a new target image frame is generated based on the motion information and the raw image frame. Therefore, a motion estimation effect of the raw image frame is quite correlated with generation quality of the target image frame. Currently, the motion estimation effect of the motion estimation algorithm is poor, resulting in a low generation quality of the target image frame.

## SUMMARY

This application provides an image motion estimation method and related apparatus, capable of combining an optical flow motion estimation method and a 3D playfield motion estimation method to perform motion estimation on two adjacent image frames, to determine motion vector information between the two adjacent image frames. In this way, the accuracy of a motion estimation result between the two adjacent image frames can be improved.

According to a first aspect, this application provides an image motion estimation method, applied to an electronic device, a first application being installed on the electronic device, the method including: obtaining a rendering instruction delivered by the first application, the rendering instruction being used for instructing a graphics processing unit GPU to render image frames of the first application, and the image frames of the first application including a first image frame and a second image frame; identifying, from the rendering instruction, a pixel location of a first object in the first image frame and a pixel location of a second object in the first image frame, where types of the first object and the second object are different; identifying, from the rendering instruction, a pixel location of the first object in the second image frame and a pixel location of the second object in the second image frame; determining a motion vector of the pixel locations of the first object between the first image frame and the second image frame by using an optical flow motion estimation method; and obtaining native motion vector information of the first application, and determining, from the native motion vector information, a motion vector of the pixel locations of the second object between the first image frame and the second image frame.

According to the image motion estimation method provided in this application, rendering instructions applied to rendering objects in image frames by an application may be intercepted, and for different types of rendering objects, different motion estimation methods are used. In this way, different motion estimation methods are applicable to different rendering objects. For example, an effect of the optical flow motion estimation method is relatively robust, and may be effective in most motion scenarios. However, when a moving speed of an object in an image frame is relatively fast, an error may occur on an optical flow motion estimation result. The 3D playfield motion estimation method can still ensure a relatively accurate motion estimation result when a motion speed of an object in an image frame is relatively fast. However, the 3D playfield motion estimation method cannot be used in motion estimation of a translucent object. Native playfield vector information of an application is determined by using the 3D playfield motion estimation method. Compared with using a same motion estimation method for different rendering objects, using different estimation methods for different types of rendering objects can improve the accuracy of a motion estimation result between two adjacent image frames.

In a possible implementation, the electronic device includes a motion estimation module; the obtaining a rendering instruction delivered by the first application specifically includes: obtaining, by the motion estimation module from a graphics interface, the rendering instruction delivered by the first application; and the obtaining native motion vector information of the first application, and determining, from the native motion vector information, a motion vector of the pixel locations of the second object between the first image frame and the second image frame specifically includes: obtaining, by the motion estimation module from the graphics interface, the native motion vector information of the first application, and determining, from the native motion vector information, the motion vector of the pixel locations of the second object between the first image frame and the second image frame.

In this way, the native motion vector information of the application can be directly obtained from the graphics interface, so that the native motion vector information can be obtained without adaptation of the application or perception of the application.

In a possible implementation, the electronic device further includes an optical flow algorithm interface; the determining a motion vector of the pixel locations of the first object between the first image frame and the second image frame by using an optical flow motion estimation method specifically includes: determining, by the optical flow algorithm interface, optical flow motion vector information between the first image frame and the second image frame; sending, by the optical flow algorithm interface, the optical flow motion vector information between the first image frame and the second image frame to the motion estimation module; and determining, by the motion estimation module from the optical flow motion vector information between the first image frame and the second image frame, the motion vector of the pixel locations of the first object between the first image frame and the second image frame based on the pixel location of the first object in the first image frame and the pixel location of the first object in the second image frame.

In this way, an optical flow algorithm interface on a system on a chip (SoC) platform can be directly invoked to perform motion estimation by using an optical flow motion estimation method, thereby simplifying an operation amount of the motion estimation module.

In a possible implementation, the electronic device further includes an optical flow algorithm interface; and the determining a motion vector of the pixel locations of the first object between the first image frame and the second image frame by using an optical flow motion estimation method specifically includes: determining, by the optical flow algorithm interface, an optical flow motion vector of the pixel locations of the first object between the first image frame and the second image frame based on the pixel location of the first object in the first image frame, the pixel location of the second object in the second image frame, the first image frame, and the second image frame; sending, by the optical flow algorithm interface, the optical flow motion vector of the pixel locations of the first object between the first image frame and the second image frame to the motion estimation module; and using, by the motion estimation module, the optical flow motion vector of the pixel locations of the first object between the first image frame and the second image frame as the motion vector of the pixel locations of the first object between the first image frame and the second image frame.

In this way, an optical flow algorithm interface on a system on a chip platform can be directly invoked to perform motion estimation by using an optical flow motion estimation method, thereby simplifying an operation amount of the motion estimation module.

In a possible implementation, the method further includes: obtaining, by the motion estimation module from the graphics interface, a buffer address of the first image frame and a buffer address of the second image frame; sending, by the motion estimation module, the buffer address of the first image frame and the buffer address of the second image frame to the optical flow algorithm interface; and obtaining, by the optical flow algorithm interface, the first image frame from the buffer address of the first image frame, and obtaining the second image frame from the buffer address of the second image frame.

In a possible implementation, the native motion vector information is playfield motion vector information between the first image frame and the second image frame and determined by the first application by using a 3D playfield estimation method.

In a possible implementation, the electronic device further includes a frame interpolation module, and the method further includes: sending, by the motion estimation module, the first image frame, the second image frame, and the motion vector information between the first image frame and the second image frame to the frame interpolation module; and generating, by the frame interpolation module, a target image frame based on the first image frame, the second image frame, and the motion vector information between the first image frame and the second image frame, where the motion vector information includes the motion vector of the pixel locations of the first object between the first image frame and the second image frame, and the motion vector of the pixel locations of the second object between the first image frame and the second image frame.

In this way, frame interpolation can be performed by using the motion vector information between the first image frame and the second image frame, thereby reducing the power consumption of the electronic device.

In a possible implementation, before the identifying, from the rendering instruction, a pixel location of a first object in the first image frame and a pixel location of a second object in the first image frame, the method further includes: determining, by the motion estimation module, that the native motion vector information is capable of being obtained from the graphics interface.

In a possible implementation, the optical flow motion estimation method includes any one of the following: a pyramid optical flow method, a Lucas-Canard method, and a neural network-based optical flow method.

In a possible implementation, the graphics interface may include any one of the following: an open graphic library OpenGL, an open graphic library for an embedded system OpenGL ES, and a drawing application programming interface Vulkan.

According to a second aspect, this application provides an image motion estimation method, applied to an electronic device, a first application being installed on the electronic device. The method includes: obtaining a rendering instruction delivered by the first application, the rendering instruction being used for instructing a GPU to render image frames of the first application, and the image frames of the first application including a first image frame and a second image frame; identifying, from the rendering instruction, a pixel location of the first object in the second image frame and a pixel location of the second object in the second image frame; identifying, from the rendering instruction, a pixel location of the first object in the second image frame and a pixel location of the second object in the second image frame; determining a motion vector of the pixel locations of the first object between the first image frame and the second image frame by using an optical flow motion estimation method; obtaining a first transform matrix and first depth information of the first image frame, and a second transform matrix and second depth information of the second image frame; and determining a motion vector of the pixel locations of the second object between the first image frame and the second image frame by using a 3D playfield motion estimation method based on the first transform matrix, the first depth information, the second transform matrix, and the second depth information.

According to the image motion estimation method provided in this application, rendering instructions applied to rendering objects in image frames by a game application may be intercepted, and for different types of rendering objects, different motion estimation methods are used. In this way, different motion estimation methods are applicable to different rendering objects. For example, an effect of the optical flow motion estimation method is relatively robust, and may be effective in most motion scenarios. The 3D playfield motion estimation method can still ensure a relatively accurate motion estimation result when a motion speed of an object in an image frame is relatively fast. However, calculation of a motion vector of a dynamic object by using a 3D playfield estimation method is relatively complex, and takes a relatively long calculation time. Compared with using a same motion estimation method for different rendering objects, using different estimation methods for different types of rendering objects may quickly determine a motion estimation result between two adjacent image frames.

In a possible implementation, the electronic device includes a motion estimation module; the obtaining a rendering instruction delivered by the first application specifically includes: obtaining, by the motion estimation module from a graphics interface, the rendering instruction delivered by the first application; and the obtaining a first transform matrix and first depth information of the first image frame, and a second transform matrix and second depth information of the second image frame specifically includes: obtaining, by the motion estimation module from the graphics interface, a first transform matrix and first depth information of the first image frame, and a second transform matrix and second depth information of the second image frame.

In this way, transform matrices and depth information of image frames in the application can be directly obtained from the graphics interface, so that the transform matrices and the depth information of the image frames can be obtained without adaptation of the application or perception of the application.

In a possible implementation, the electronic device further includes an optical flow algorithm interface; the determining a motion vector of the pixel locations of the first object between the first image frame and the second image frame by using an optical flow motion estimation method specifically includes: determining, by the optical flow algorithm interface, optical flow motion vector information between the first image frame and the second image frame; sending, by the optical flow algorithm interface, the optical flow motion vector information between the first image frame and the second image frame to the motion estimation module; and determining, by the motion estimation module from the optical flow motion vector information between the first image frame and the second image frame, the motion vector of the pixel locations of the first object between the first image frame and the second image frame based on the pixel location of the first object in the first image frame and the pixel location of the first object in the second image frame.

In this way, an optical flow algorithm interface on a system on a chip platform can be directly invoked to perform motion estimation by using an optical flow motion estimation method, thereby simplifying an operation amount of the motion estimation module.

In a possible implementation, the electronic device further includes an optical flow algorithm interface; and the determining a motion vector of the pixel locations of the first object between the first image frame and the second image frame by using an optical flow motion estimation method specifically includes: determining, by the optical flow algorithm interface, an optical flow motion vector of the pixel locations of the first object between the first image frame and the second image frame based on the pixel location of the first object in the first image frame, the pixel location of the first object in the second image frame, the first image frame, and the second image frame; sending, by the optical flow algorithm interface, the optical flow motion vector of the pixel locations of the first object between the first image frame and the second image frame to the motion estimation module; and using, by the motion estimation module, the optical flow motion vector of the pixel locations of the first object between the first image frame and the second image frame as the motion vector of the pixel locations of the first object between the first image frame and the second image frame.

In this way, an optical flow algorithm interface on a system on a chip platform can be directly invoked to perform motion estimation by using an optical flow motion estimation method, thereby simplifying an operation amount of the motion estimation module.

In a possible implementation, the method further includes: obtaining, by the motion estimation module from the graphics interface, a buffer address of the first image frame and a buffer address of the second image frame; sending, by the motion estimation module, the buffer address of the first image frame and the buffer address of the second image frame to the optical flow algorithm interface; and obtaining, by the optical flow algorithm interface, the first image frame from the buffer address of the first image frame, and obtaining the second image frame from the buffer address of the second image frame.

In a possible implementation, the electronic device further includes a frame interpolation module, and the method further includes: sending, by the motion estimation module, the first image frame, the second image frame, and the motion vector information between the first image frame and the second image frame to the frame interpolation module; and generating, by the frame interpolation module, a target image frame based on the first image frame, the second image frame, and the motion vector information between the first image frame and the second image frame, where the motion vector information includes the motion vector of the pixel locations of the first object between the first image frame and the second image frame, and the motion vector of the pixel locations of the second object between the first image frame and the second image frame.

In this way, frame interpolation can be performed by using the motion vector information between the first image frame and the second image frame, thereby reducing the power consumption of the electronic device.

In a possible implementation, the optical flow motion estimation method includes any one of the following: a pyramid optical flow method, a Lucas-Canard method, and a neural network-based optical flow method.

In a possible implementation, the graphics interface may include any one of the following: an open graphic library OpenGL, an open graphic library for an embedded system OpenGL ES, and a drawing application programming interface Vulkan.

According to a third aspect, this application provides an image motion estimation method, applied to an electronic device, a first application being installed on the electronic device. The method includes: obtaining a rendering instruction delivered by the first application, the rendering instruction being used for instructing a GPU to render image frames of the first application, and the image frames of the first application including a first image frame and a second image frame; obtaining, by the graphics interface, a first transform matrix of the first image frame, first depth information of the first image frame, a second transform matrix of the second image frame and second depth information of the second image frame; determining optical flow motion vector information between the first image frame and the second image frame by using an optical flow motion estimation method; the optical flow motion vector information including the optical flow motion vector of a first pixel location in a second image; determining playfield motion vector information between the first image frame and the second image frame by using a 3D playfield motion estimation method based on the first transform matrix, the first depth information, the second transform matrix, and the second depth information; the optical flow motion vector information including the playfield motion vector of the first pixel location and if a difference between the optical flow motion vector of the first pixel location and a playfield motion vector of the first pixel location is less than a first specified threshold, and using an average of the optical flow motion vector of the first pixel location and the playfield vector of the first pixel location as the motion vector of the first pixel location.

According to the image motion estimation method provided in this application, motion estimation can be performed on two adjacent image frames by combining transform matrix and depth information of the two adjacent image frames with an optical flow motion estimation method and a 3D playfield motion estimation method, to determine motion vector information between the two adjacent image frames. In this way, the accuracy of a motion estimation result can be improved.

In a possible implementation, if the difference between the optical flow motion vector of the first pixel location and the playfield motion vector of the first pixel location is greater than or equal to the first specified threshold, a depth value of the first pixel location and a depth value of a surrounding pixel location around the first pixel location in the second image frame are obtained from the second depth information; if a difference between the depth value of the first pixel location and the depth value of surrounding pixel location is less than a second specified threshold, the optical flow motion vector of the first pixel location is used as the motion vector of the first pixel location; and if the difference between the depth value of the first pixel location and the depth value of surrounding pixel location is less than a second specified threshold, the motion vector of the playfield at the first pixel location is used as the motion vector of the first pixel location.

In a possible implementation, the optical flow motion estimation method includes any one of the following: a pyramid optical flow method, a Lucas-Canard method, and a neural network-based optical flow method.

In a possible implementation, the graphics interface may include any one of the following: an open graphic library OpenGL, an open graphic library for an embedded system OpenGL ES, and a drawing application programming interface Vulkan.

According to a fourth aspect, this application provides an electronic device, including one or more processors and one or more memories. The one or more memories are coupled to the one or more processors, and the one or more memories are configured to store a computer program. When the one or more processors execute the computer program, the method according to any one of the possible implementations in the first aspect is performed.

According to a fifth aspect, this application provides another electronic device, including one or more functional modules, the one or more functional modules being configured to perform the method according to any one of the possible implementations in the first aspect.

According to a sixth aspect, this application provides a chip system, including a processing circuit and an interface circuit. The interface circuit is configured to receive instructions and transmit the instructions to the processing circuit. The processing circuit is configured to run the instructions to perform the method according to any one of the possible implementations of any one of the foregoing aspects.

According to a seventh aspect, this application provides a computer-readable storage medium, including a computer program. When the computer program is run on a processor of an electronic device, the method according to any one of the possible implementations of the first aspect is performed.

According to an eighth aspect, an embodiment of this application provides a computer program product. When the computer program product runs on a computer, the computer is enabled to perform the method according to any one of the possible implementations of any one of the foregoing aspects.

## BRIEF DESCRIPTION OF DRAWINGS

FIG. 1 is a schematic diagram of a hardware structure of an electronic device according to an embodiment of this application;

FIG. 2 is a schematic diagram of a software system architecture of an electronic device according to an embodiment of this application;

FIG. 3 is a schematic flowchart of interaction in a software system architecture of an electronic device according to an embodiment of this application;

FIG. 4 is a schematic flowchart of an image motion estimation method according to an embodiment of this application;

FIG. 5 is a schematic diagram of a stencil buffer of a first image frame according to an embodiment of this application;

FIG. 6 is a schematic diagram of a stencil buffer of a second image frame according to an embodiment of this application;

FIG. 7 is a schematic diagram of motion vector information between a first image frame and a second image frame according to an embodiment of this application;

FIG. 8A is a schematic diagram of generation a target image frame according to an embodiment of this application;

FIG. 8B is a schematic diagram of generation of another target image frame according to an embodiment of this application;

FIG. 9 is a schematic flowchart of an image motion estimation method according to another embodiment of this application; and

FIG. 10 is a schematic flowchart of an image motion estimation method according to still another embodiment of this application.

## DESCRIPTION OF EMBODIMENTS

The following clearly and thoroughly describes technical solutions in embodiments of this application with reference to the accompanying drawings. In the descriptions of the embodiments of this application, "/" indicates "or" unless otherwise specified. For example, A/B may represent A or B. In the specification, "and/or" describes only an association relationship between associated objects, and represents that three relationships may exist. For example, A and/or B may represent the following three cases: Only A exists, both A and B exist, and only B exists. In addition, in the descriptions of the embodiments of this application, "a plurality of" indicates two or more.

The terms "first" and "second" below are used for descriptive purposes only, and cannot be construed as implying or implying relative importance or implicitly indicating the number of technical features indicated. Therefore, a feature defined by "first" or "second" may explicitly or implicitly include one or more features. In the description of the embodiments of this application, unless otherwise stated, "a plurality of" refers to two or more.

A hardware structure of an electronic device according to an embodiment of this application is introduced below.

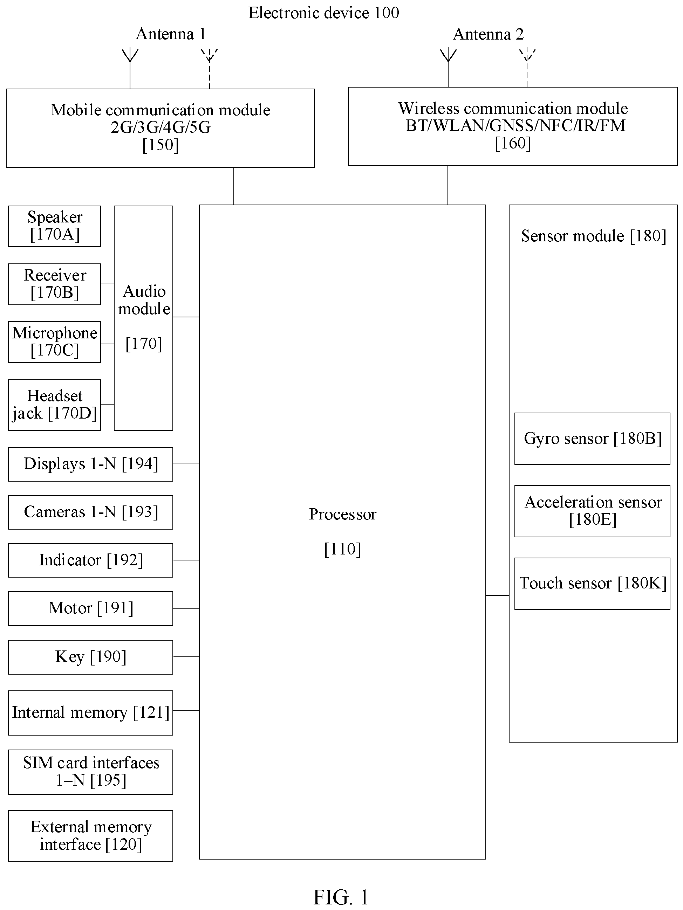

FIG. 1 is a schematic diagram of a hardware structure of an electronic device 100 according to an embodiment of this application.

It should be understood that the electronic device 100 shown in FIG. 1 is only an example of the electronic device, and the electronic device 100 may have more or fewer components than those shown in FIG. 1, may combine two or a plurality of components, or may have a different component configuration. The components shown in FIG. 1 may be implemented in hardware that includes one or more signal processors and/or application-specific integrated circuits, software, or a combination of hardware and software.

The electronic device 100 may include: a processor 110, an external memory interface 120, an internal memory 121, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (SIM) card interface 195, and the like. The sensor module 180 may include a gyroscope sensor 180B, an acceleration sensor 180E, and a touch sensor 180K.

It can be understood that the structure illustrated in an embodiment of the present invention does not constitute a specific limitation on the electronic device 100. In some other embodiments of this application, the electronic device 100 may include more or fewer components than those shown in the figure, or some components may be combined, or some components may be split, or a different component arrangement may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), etc. Different processing units may be independent components, or may be integrated into one or more processors.

The controller may be a nerve center and a command center of the electronic device 100. The controller may generate an operation control signal based on instruction operation code and a time-sequence signal, to complete control of instruction fetch and instruction execution.

A memory may be further disposed in the processor 110, to store instructions and data. In some embodiments, the memory in the processor 110 is a cache. The memory may store an instruction or data that has been used or cyclically used by the processor 110. If the processor 110 needs to use the instructions or data again, the instructions or data may be directly invoked from the memory. Repeated access is avoided, and a waiting time of the processor 110 is reduced, thereby improving system efficiency.

A wireless communication function of the electronic device 100 may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal.

The mobile communication module 150 may provide a solution, applied to the electronic device 100, for wireless communication including 2G/3G/4G/5G, or the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation by using the antenna 1.

The modem processor may include a modulator and a demodulator. The modulator is configured to modulate a to-be-sent low-frequency baseband signal into an intermediate/high-frequency signal. The demodulator is configured to demodulate the received electromagnetic wave signal into a low-frequency baseband signal. Then the demodulator transfers the low-frequency baseband signal obtained through demodulation to the baseband processor for processing. After being processed by the baseband processor, the low-frequency baseband signal is transmitted to the application processor. The application processor outputs a sound signal through an audio device (not limited to a speaker 170A, a receiver 170B, and the like), or displays an image or a video through the display 194.

The wireless communication module 160 may provide a solution to wireless communication applied to the electronic device 100 and including wireless local area networks (wireless local area networks, WLAN) (such as wireless fidelity (wireless fidelity, Wi-Fi)), Bluetooth (bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more devices that integrate at least one communication processing module. The wireless communications module 160 receives an electromagnetic wave via the antenna 2, performs frequency modulation and filtering on the electromagnetic wave signal, and sends the processed signal to the processor 110. The wireless communication module 160 may further receive a to-be-sent signal from the processor 110, perform frequency modulation and amplification on the to-be-sent signal, and convert an amplified signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric calculation and render graphics. The processor 110 may include one or more GPUs that execute a program instruction to generate or change display information.

The display 194 is configured to display an image, a video, or the like. The display 194 includes a display panel. The display panel may be a liquid crystal display panel (liquid crystal display, LCD). The display panel may be manufactured by using an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into an image visible to naked eyes. The ISP may further perform algorithm optimization on noise and brightness of the image. The ISP may further optimize parameters such as exposure and color temperature of a photographing scene. In some embodiments, the ISP may be arranged in the camera 193.

The camera 193 is configured to capture a static image or a video. An optical image of an object is generated by using a lens and projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into an image signal in a standard format such as RGB and YUV. In some embodiments, the electronic device 100 may include one or N cameras 193, where N is a positive integer greater than 1.

The digital signal processor is configured to process a digital signal. In addition to processing a digital image signal, the digital signal processor may further process another digital signal.

The video codec is configured to compress or decompress a digital video. The electronic device 100 may support one or more video codecs.

The NPU is a neural-network (neural-network, NN) computing processor, which quickly processes input information by learning from a structure of a biological neural network, for example, a mode of transmission between neurons in a human brain, and may further continuously perform self-learning.

The external memory interface 120 may be configured to be connected to an external storage card such as a micro SD card, to expand a storage capacity of the electronic device 100. The external storage card communicates with the processor 110 via the external memory interface 120, to implement a data storage function, for example, storing files such as music and videos into the external storage card.

The internal memory 121 may be configured to store computer-executable program code, and the executable program code includes instructions. The processor 110 runs the instructions stored in the internal memory 121, to perform various functional applications and data processing of the electronic device 100. The internal memory 121 may include a program storage area and a data storage area. The program storage area may store an operating system, an application required by at least one function (such as a sound playback function and an image display function), and the like. The data storage area may store data (for example, audio data and an address book) and the like created during use of the electronic device 100. In addition, the internal memory 121 may include a high-speed random access memory, and may also include a non-volatile memory, for example, at least one magnetic disk storage device, flash storage device, universal flash storage (universal flash storage, UFS) or the like.

The electronic device 100 may implement an audio function by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The speaker 170A, also referred to as a "loudspeaker", is configured to convert an audio electrical signal into a sound signal. The receiver 170B, also referred to as an "earpiece", is configured to convert an electrical audio signal into a sound signal. The microphone 170C, also referred to as "voice tube" or "mike", is configured to convert a sound signal into an electrical signal. The headset jack 170D is configured to connect to a wired headset. The gyroscope sensor 180B may be configured to determine a motion posture of the electronic device 100. The acceleration sensor 180E may measure acceleration of the electronic device 100 in all directions (generally directions of three axes). The touch sensor 180K is also referred to as a "touch panel". The touch sensor 180K may be disposed on the display 194. The touch sensor 180K and the display 194 form a touchscreen, also referred to as a "touch control screen". The touch sensor 180K is configured to detect a touch operation performed on or near the touch sensor. The touch sensor may transfer the detected touch operation to the application processor, to determine the touch event type. A visual output related to a touch operation may be provided through the display 194. In some other embodiments, the touch sensor 180K may alternatively be arranged on a surface of the electronic device 100 at a position different from that of the display 194. The button 190 includes a power button, a volume button, and the like. The button 190 may be a mechanical button or may be a touch key. The electronic device 100 may receive a button input, and generate a button signal input related to a user setting and function control of the electronic device 100. The motor 191 may generate a vibration prompt. The SIM card interface 195 is configured to connect an SIM card. The SIM card may be inserted into the SIM card interface 195 or withdrawn from the SIM card interface 195, to implement contact with or separation from the electronic device 100.

In the embodiments of this application, a device type of the electronic device 100 may be a mobile phone, a tablet computer, a handheld computer, a desktop computer, a laptop computer, an ultra-mobile personal computer (ultra-mobile personal computer, UMPC), a netbook, a cellular phone, a personal digital assistant (personal digital assistant, PDA), a smart home device such as a smart large-size screen and a smart speaker box, a wearable device such as a smart bracelet, a smart watch, and smart glasses, an extended reality (extended reality, XR) device such as an augmented reality (augmented reality, AR) device, a virtual reality (virtual reality, VR) device, and a mixed reality (mixed reality, MR) device, an in-vehicle device, a smart city device, and the like.

Some concepts related to motion estimation in the embodiments of this application are introduced below by using a game application as an example.

1. Game frame supplementation.

In a running process of a game application, to reduce a frame rate of image frame rendering of the game application and ensure fluency of a game picture, the electronic device 100 may perform motion estimation on a plurality of adjacent image frames that have been rendered, to obtain motion vector information between the plurality of adjacent image frames. The electronic device 100 may generate a target image frame based on the motion vector information and the plurality of adjacent image frames. The electronic device 100 may interpolate the target image frame into a presenting queue.

2. Optical flow motion estimation method.

An optical flow (optical flow) refers to an instantaneous speed of pixel motion, of an object moving in space, on an observation imaging plane. A correspondence between a pixel of a next image frame and a pixel of a former image frame in two adjacent image frames may be determined by using a change in pixels in the two adjacent image frames, thereby obtaining optical flow information between the two adjacent image frames. The optical flow information of the two adjacent image frames may be used to represent motion vector information of an object between the two adjacent image frames.

An effect of the optical flow motion estimation method is relatively robust, and may be effective in most motion scenarios. However, when a moving speed of an object in an image frame is relatively fast, an error may occur on an optical flow motion estimation result.

3. 3D playfield motion estimation method.

A 3D playfield motion estimation method refers to first determining motion information of a same object in two adjacent image frames in a 3D space, and then, projecting the motion information of the object in the 3D space to a 2D plane, to determine motion vector information of the object between the two adjacent image frames.

The 3D playfield motion estimation method can still ensure a relatively accurate motion estimation result when a motion speed of an object in an image frame is relatively fast. However, when a motion vector of a dynamic object is estimated by using the 3D playfield motion estimation method, an operation amount is relatively large, and the 3D playfield motion estimation method cannot be used in motion estimation of a translucent object.

Therefore, an embodiment of this application provides an image motion estimation method. An electronic device 100 may intercept a rendering instruction of an application for an image frame, obtain related resources of the image frame based on the rendering instruction, and combine an optical flow motion estimation method and a 3D playfield motion estimation method to perform motion estimation on two adjacent image frames, to determine motion vector information between the two adjacent image frames. The electronic device 100 may generate a target image frame based on motion vector information between two adjacent image frames and the two adjacent image frames. In this way, the accuracy of a motion estimation result between the two adjacent image frames can be improved.

A software system architecture of an electronic device provided in an embodiment of this application is described below.

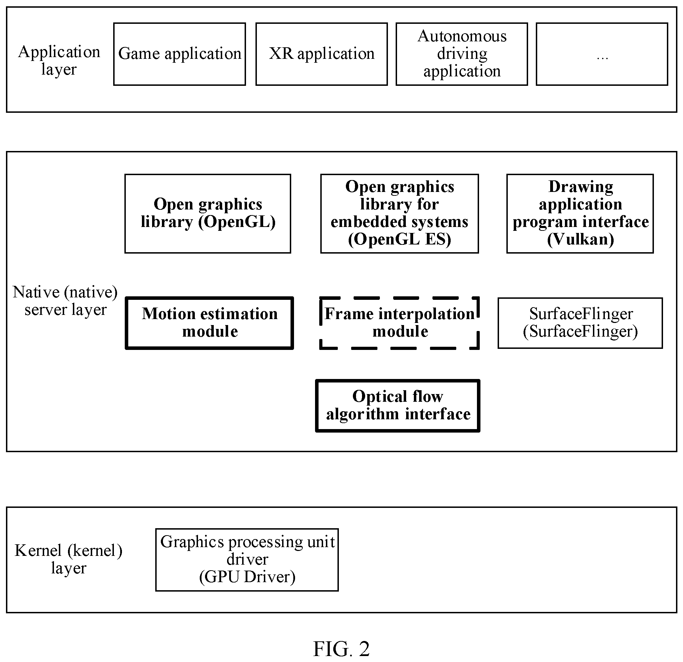

FIG. 2 is a schematic diagram of a software system architecture of an electronic device according to an embodiment of this application.

As shown in FIG. 2, a software system architecture of the electronic device 100 may include an application (application, APP) layer, a native (native) layer, and a kernel (kernel) layer.

The application layer includes one or more applications, for example, a game application, an extended reality (extended reality, XR) application, and an autonomous driving application. The application may be configured to: provide image content of an image frame, and invoke a graphics interface to configure a GPU to render the image frame based on the image content of the image frame.

The native (native) layer may include a SurfaceFlinger (SurfaceFlinger), a motion estimation module, one or more graphics interfaces, and the like. Optionally, the native (native) layer may further include a frame interpolation module and an optical flow algorithm interface. The SurfaceFlinger is configured to perform layer composition on image frames on which rendering by the GPU is completed, to generate an interface including the image frames, and send the interface including the image frames to a display for displaying. The motion estimation module may be configured to intercept a rendering instruction and the frame sending instruction that are delivered by the application, and determine motion vector information between two adjacent image frames based on related resources obtained by intercepting the rendering instruction and the frame sending instruction.

The optical flow algorithm interface may be an algorithm interface built in a system on chip (system on chip, SoC) platform of the electronic device 100. The motion estimation module may invoke an optical flow algorithm interface to obtain optical flow motion vector information between the two adjacent image frames. The motion estimation module may provide the two adjacent image frames to the optical flow algorithm interface during invoking of the optical flow algorithm interface. The optical flow algorithm interface may calculate optical flow motion vector information of the two adjacent image frames by using an optical flow motion estimation method after obtaining the two adjacent image frames, and return the optical flow motion vector information of the two adjacent image frames to the motion estimation module.

The optical flow algorithm interface may be an OpenGL extension interface provided by an SOC platform. For example, the OpenGL extension interface may include a "glTexEstimateMotionQCOM" interface and a "glTexEstimateMotionRegionsQCOM" interface.

In a possible implementation, the motion estimation module may alternatively determine optical flow motion vector information of two adjacent image frames by using an optical flow motion estimation method.

The optical flow motion estimation method may include an optical flow algorithm such as a pyramid optical flow method, a Lucas-Kanade (Lucas-Kanade) method, and a neural network-based optical flow method (FlowNet/FlowNet 2.0).

Optionally, the motion estimation module may further send a motion vector between the two adjacent image frames and the two adjacent image frames to the frame interpolation module. The frame interpolation module may generate a target image frame based on the motion vector between the two adjacent image frames and the two adjacent image frames.

The one or more graphics interfaces may include one or more of an open graphics library (open graphics library, OpenGL), an open graphics library for embedded systems (open graphics library for embedded systems, OpenGL ES), a drawing application programming interface (Vulkan), and the like. The graphics interface may be configured to configure a GPU to render an image frame.

The kernel layer may include a driver such as a graphics processing unit driver (graphics processing unit driver, GPU Driver). The GPU Driver is configured to drive the GPU to perform an operation on an upper layer (for example, an operation, configured by the graphics interface, of rendering an image frame).

An interaction process of modules in the foregoing software system architecture is specifically described below by using a game application as an example.

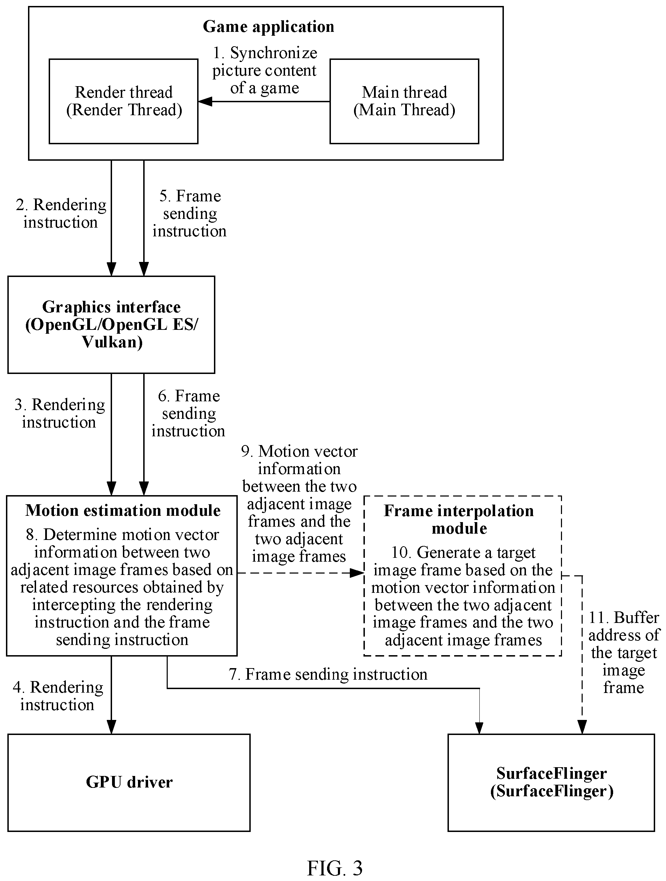

FIG. 3 is a schematic diagram of an interaction process for a software system architecture of an electronic device according to an embodiment of this application.

As shown in FIG. 3, the interaction process for the software system architecture is specifically described by using a game application as an example. The game application may include a main thread (Main Thread) and a render thread (Render Thread).

The interaction process of the modules may be as follows:

1. The main thread of the game application may synchronize image content to the render thread.

2. After obtaining the image content, the render thread may deliver a rendering instruction to a graphics interface. The graphics interface may include any one of OpenGL, OpenGL ES, and Vulkan.

3. The graphics interface may send the rendering instruction to the motion estimation module.

4. The motion estimation module may send the rendering instruction to a GPU driver.

After obtaining the rendering instruction, the GPU driver sends the rendering instruction to the GPU, to configure the GPU to perform rendering based on the image content to obtain the image frame, and store the rendered image frame to a buffer specified by the rendering instruction.

After completing rendering the image frame, the GPU may store the image frame to the buffer specified by the rendering instruction.

5. The render thread may send a frame sending instruction to the graphics interface after delivering the rendering instruction.

6. The graphics interface may send the frame sending instruction to the motion estimation module.

7. The motion estimation module may forward the frame sending instruction to a SurfaceFlinger.

After acquiring the frame sending instruction, the SurfaceFlinger may obtain buffer information of the image frame from the frame sending instruction. After the image frames rendered by the GPU are stored in the buffer, by using a fence (fence) mechanism, the SurfaceFlinger may learn in time that the image frames are stored in the buffer. Therefore, the SurfaceFlinger may take out the image frames from the buffer of the image frames for layer compositing when a vertical synchronization (vsync) signal arrives, to compose an interface including the image frames, and send the interface including the image frames to a display for displaying.

8. The motion estimation module may determine motion vector information between two adjacent image frames based on related resources obtained by intercepting the rendering instruction and the frame sending instruction.

In a possible implementation, the motion estimation module may identify types of one or more rendering objects in the image frames based on the rendering instruction of the image frames. The motion estimation module may determine, based on types of the one or more rendering objects, a motion estimation manner corresponding to each of the one or more rendering objects. The motion estimation module may determine a motion vector of each of the one or more rendering objects based on the motion estimation manner corresponding to each of the one or more rendering objects. The motion estimation module may determine motion vector information of the image frames based on the motion vectors of the one or more rendering objects and pixel locations of the one or more rendering objects in the image frames. The motion vector information of the image frames includes a motion vector of the pixel locations in the image frames.

In a possible implementation, the motion estimation module may obtain, based on the rendering instruction of the image frames, transform matrices and depth information of the two adjacent image frames, and based on the frame sending instruction, the two adjacent image frames from the buffer of the image frames indicated in the frame sending instruction. The motion estimation module may determine motion vector information between the two adjacent image frames based on two adjacent image frames and the transform matrices and the depth information of the two adjacent image frames by combining an optical flow motion estimation method and a 3D playfield motion estimation method.

When the motion vector information between the two adjacent image frames determined by the motion estimation module is used for frame interpolation, the following steps may be included:

9. The motion estimation module sends the motion vector information between the two adjacent image frames and the two adjacent image frames to the frame interpolation module.

10. The frame interpolation module generates a target image frame based on the motion vector information between the two adjacent image frames and the two adjacent image frames.

After obtaining the rendered image frame, the frame interpolation module may determine the target image frame based on the two adjacent image frames and the motion vector information of the two adjacent image frames.

The frame interpolation module may interpolate the target image frame between the two adjacent image frames, or may generate the target image frame after the two adjacent image frames.

For example, the two adjacent image frames may include a first image frame and a second image frame, and a rendering time of the second image frame is after a rendering time of the first image frame. When the frame interpolation module determines to interpolate the target image frame between the first image frame and the second image frame, the frame interpolation module may determine the target image frame based on the first image frame, the second image frame, and the motion vector information between the first image frame and the second image frame. The frame interpolation module may interpolate the target image frame between the first image frame and the second image frame and send the target image frame to the SurfaceFlinger for compositing and sending.

When the frame interpolation module determines to interpolate the target image frame after the second image frame, the frame interpolation module may determine the target image frame based on the second image frame and the motion vector information between the first image frame and the second image frame. The frame interpolation module may place the target image frame after the second image frame and send the target image frame to the SurfaceFlinger for compositing and rendering.

The frame interpolation module may store the target image frame into the buffer of the target image frame.

11. The frame interpolation module may send a buffer address of the target image frame to the SurfaceFlinger.

After obtaining the buffer of the target image frame, the SurfaceFlinger may take out the target image frame from the buffer of the target image frame for layer compositing, until a next vsync signal arrives, to compose an interface including the target image frame, and send the interface including the target image frame to a display for displaying.

Motion estimation provided in the embodiments of this application is described below with reference to an application scenario.

Application scenario 1:

Due to the fact that some game applications support a function that requires motion estimation, such as motion blur, in a game scenario such as when a viewing angle of image frames is rotating, the game application renders an object, such as a character or a background, in the image frames to be photographed by a camera under high-speed motion, so that the object in the image frames looks quite blurry. To achieve the effect of motion blurring, when rendering image frames, the game application may store a playfield motion vector of an object by projecting motion information of the object in the image frames in a three-dimensional space to a two-dimensional image. The game application may deliver playfield motion vector information in the image frames to the graphics interface by using a rendering instruction. The playfield motion vector information in the image frames includes a playfield motion vector of a pixel location of an opaque object, but the playfield motion vector information in the image frames does not include a playfield motion vector of a pixel location of a translucent object (such as a shadow or a skill effect). Therefore, the motion estimation module may intercept rendering instructions of the game application for rendering objects in image frames, to obtain playfield motion vectors of pixel locations of the rendering objects, and use the playfield motion vectors of the pixel locations of an opaque object as a motion vector of the pixel locations of the opaque object. For a translucent object, the motion estimation module may calculate optical flow information between two adjacent image frames, to determine optical flow motion vector information between the two adjacent image frames from the optical flow information, and use an optical flow motion vector of the pixel locations of the translucent object as a motion vector of the pixel locations of the opaque object.

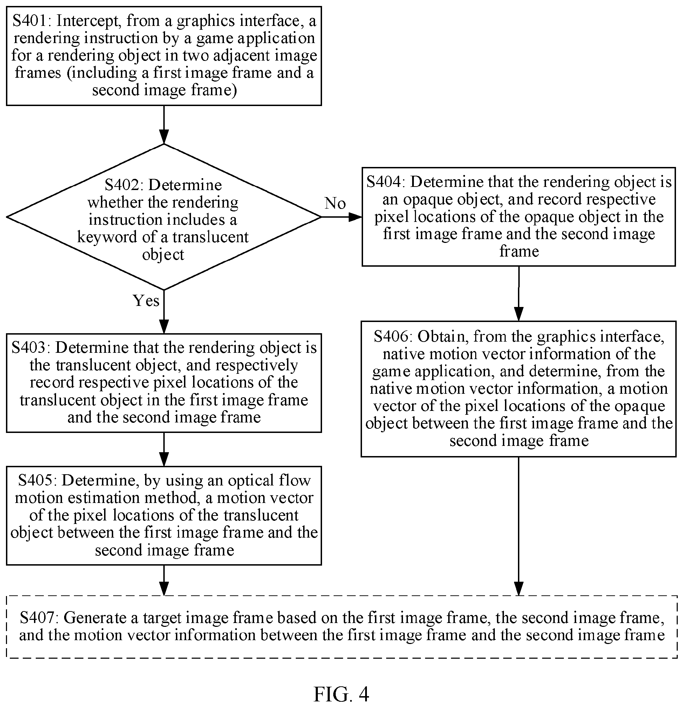

FIG. 4 is a schematic flowchart of an image motion estimation method according to an embodiment of this application.

As shown in FIG. 4, the image motion estimation method may include the following steps.

S401: A motion estimation module may intercept, from a graphics interface, a rendering instruction by a game application for a rendering object in two adjacent image frames.

The two adjacent image frames include a first image frame and a second image frame. A rendering time of the second image frame is after a rendering time of the first image frame.

The game application may first deliver the rendering instruction of the first image frame to the graphics interface. After delivering the rendering instruction of the first image frame, the game application may deliver the frame sending instruction of the first image frame to the SurfaceFlinger through the graphics interface. After delivering the frame sending instruction of the first image frame to the SurfaceFlinger through the graphics interface, the game application may deliver the rendering instruction of the second image frame to the graphics interface. The game application may deliver the frame sending instruction of the second image frame to the SurfaceFlinger through the graphics interface after delivering the rendering instruction of the second image frame.

The rendering instruction may include a plurality of instructions for configuring the graphics interface to invoke the GPU to render the image frames. When an image frame is rendered, the image frame is rendered in regions based on objects in the image frame. Therefore, the rendering instruction may indicate a label list of a plurality of objects in the image frame and a pixel location of each object in the image frame.

S402: The motion estimation module may determine whether the rendering instruction includes a keyword of a translucent object.

For example, the motion estimation module may intercept a "glLabelObjectEXT" instruction in the rendering instruction, and the motion estimation module may determine whether there is a keyword of a translucent object in a label (label) carried in the "glLabelObjectEXT" instruction. If so, the motion estimation module may determine that a rendering object corresponding to the "glLabelObjectEXT" instruction is a translucent object. If not, the motion estimation module may determine that a rendering object corresponding to the "glLabelObjectEXT" instruction is an opaque object.

S403: If the rendering instruction includes the keyword of the translucent object, the motion estimation module may determine that the rendering object is the translucent object, and record pixel locations of the translucent object in the first image frame and the second image frame.

S404: If the rendering instruction does not include the keyword of the translucent object, the motion estimation module may determine that the rendering object is an opaque object, and record pixel locations of the opaque object in the first image frame and the second image frame.

In a process of rendering the first image frame, the motion estimation module may intercept a rendering instruction of the first image frame, and identify and record a pixel location of the translucent object in the first image frame. In a process of rendering the second image frame, the motion estimation module may intercept a rendering instruction of the second image frame, and identify and record a pixel location of the translucent object in the second image frame.

Specifically, in the process of rendering the first image frame, the motion estimation module may start a stencil test (stencil test) and create a stencil buffer (stencil buffer) A. An $[i, j]^{th}$ stencil value in a stencil buffer A corresponds to an $[i, j]^{th}$ pixel location in the first image frame. i represents a row in which the pixel location is located, and j represents a column in which the pixel location is located. i and j are positive integers. The motion estimation module may record, in the stencil buffer A, a stencil value of a pixel location corresponding to the translucent object in the first image frame as $St_{rans}$, a stencil value of a pixel location corresponding to an opaque object in the first image frame as $St_{opaq}$. For example, $St_{rans}$ may be set to 0, and $St_{opaq}$ may be set to 1.

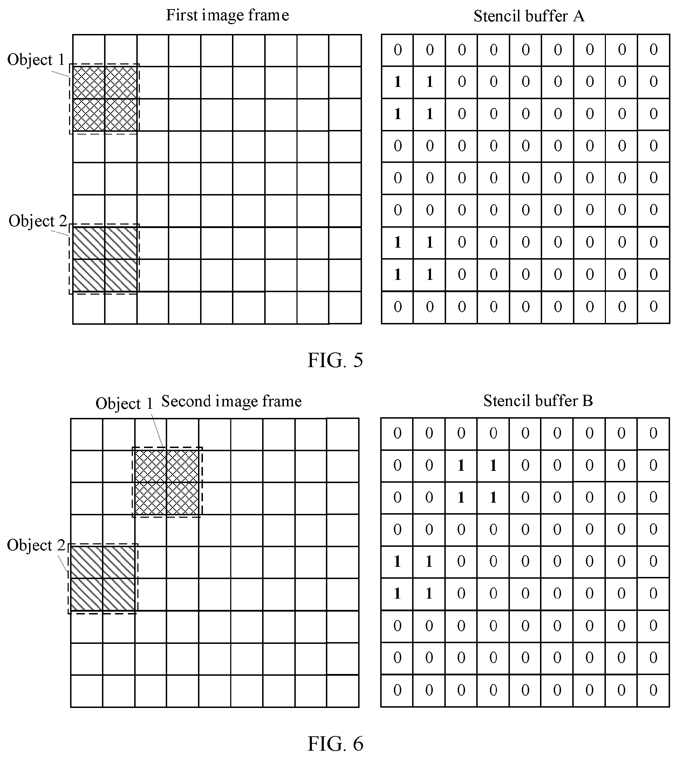

For example, as shown in FIG. 5, a pixel size of the first image frame may be 9*9, that is, 9 rows*9 columns in the first image frame, 81 pixels in total. Therefore, 9 rows*9 columns may alternatively be included in the stencil buffer A, 81 stencil values in total. An object 1 and an object 2 in the first image frame may be opaque objects, and objects at other pixel locations in the first image frame may be translucent objects. Due to the fact that pixel locations of the object 1 in the first image frame include a $[2, 1]^{th}$ pixel, a $[2, 2]^{th}$ pixel, a $[3, 1]^{th}$ pixel, and a $[3, 2]^{th}$ pixel, and pixel locations of the object 2 in the first image frame include a $[7, 1]^{th}$ pixel, a $[7, 2]^{th}$ pixel, a $[7, 1]^{th}$ pixel, and a $[7, 2]^{th}$ pixel, a $[2, 1]^{th}$ stencil value, a $[2, 2]^{th}$ stencil value, a $[3, 1]^{th}$ stencil value, and a $[3, 2]^{th}$ stencil value, and a $[7, 1]^{th}$ stencil value, a $[7, 2]^{th}$ stencil value, a $[7, 1]^{th}$ stencil value, and a $[7, 2]^{th}$ stencil value in the stencil buffer A may all be recorded as 1. A stencil value of another location in the stencil buffer A may be recorded as 0.

In the process of rendering the second image frame, the motion estimation module may start a stencil test (stencil test) and create a stencil buffer (stencil buffer) B. An $[i, j]$th stencil value in a stencil buffer B corresponds to an $[i, j]$th pixel location in the second image frame, where i and j are positive integers. The motion estimation module may record, in the stencil buffer B, a stencil value of a pixel location corresponding to the translucent object in the second image frame as $St_{rans}$, a stencil value of a pixel location corresponding to an opaque object in the second image frame as $St_{opaq}$. For example, $St_{rans}$ may be set to 0, and $St_{opaq}$ may be set to 1.

For example, as shown in FIG. 6, a pixel size of the second image frame may be 9*9, that is, 9 rows*9 columns in the second image frame, 81 pixels in total. Therefore, 9 rows*9 columns may alternatively be included in the stencil buffer B, 81 stencil values in total. An object 1 and an object 2 in the second image frame may be opaque objects, and objects at other pixel locations in the second image frame may be translucent objects. Due to the fact that the pixel location of the object 1 in the second image frame includes a $[2, 3]^{th}$ pixel, a $[2, 4]^{th}$ pixel, a $[3, 3]^{th}$ pixel, and a $[3, 4]^{th}$ pixel, and the pixel location of the object 2 in the second image frame includes a $[5, 1]^{th}$ pixel, a $[5, 2]^{th}$ pixel, a $[6, 1]^{th}$ pixel, and a $[6, 2]^{th}$ pixel, a $[2, 3]^{th}$ stencil value, a $[2, 4]^{th}$ stencil value, a $[3, 3]^{th}$ stencil value, and a $[3, 4]^{th}$ stencil value, and a $[5, 1]^{th}$ stencil value, a $[5, 2]^{th}$ stencil value, a $[6, 1]^{th}$ stencil value, and a $[6, 2]^{th}$ stencil value in the stencil buffer B may all be recorded as 1. A stencil value of another location in the stencil buffer B may be recorded as 0.

S405: The motion estimation module may determine, by using an optical flow motion estimation method, a motion vector of the pixel locations of the translucent object between the first image frame and the second image frame.

The motion estimation module records the pixel locations of the translucent object in the first image frame and the second image frame by using the stencil buffer A and the stencil buffer B respectively. Therefore, the motion estimation module may intercept the rendering instruction on the graphics interface, to obtain a buffer of the first image frame and a buffer of the second image frame. The motion estimation module may take out the rendered first image frame from the buffer of the first image frame, and extract the rendered second image frame from the buffer of the second image frame. The motion estimation module may determine a pixel location of a translucent object in the first image frame based on the stencil buffer A and the first image frame, and determine a pixel location of a translucent object in the second image frame based on the stencil buffer B and the second image frame.

The motion estimation module may determine optical flow information of the translucent object between the first image frame and the second image frame by using an optical flow motion estimation method based on the first image frame, the second image frame, and the respective pixel locations of the translucent object in the first image frame and the second image frame.

The motion estimation module may determine, based on optical flow information of the translucent object between the first image frame and the second image frame, a motion vector of the pixel locations of the translucent object between the first image frame and the second image frame.

The motion estimation module may determine the optical flow information of the translucent object between the first image frame and the second image frame by using an optical flow motion estimation method such as a pyramid optical flow method, a Lucas-Kanade (Lucas-Kanade) method, or a neural network-based optical flow method (FlowNet/FlowNet 2.0).

In a possible implementation, the motion estimation module may provide the first image frame and the second image frame to an optical flow algorithm interface provided by an SoC. The optical flow algorithm interface may calculate optical flow motion vector information of two adjacent image frames by using an optical flow motion estimation method, and return optical flow motion vector information between a first image frame and a second image frame to the motion estimation module. The motion estimation module may determine, based on the respective pixel locations of the translucent object in the first image frame and the second image frame and from optical flow motion vector information between the first image frame and the second image frame, a motion vector of the pixel locations of the translucent object between the first image frame and the second image frame.

In a possible implementation, the motion estimation module may provide the first image frame, the second image frame, and the respective pixel locations of the translucent object in the first image frame and the second image frame to an optical flow algorithm interface provided by an SoC. The optical flow algorithm interface may determine a motion vector of the pixel locations of the translucent object between the first image frame and the second image frame based on the first image frame, the second image frame, and the respective pixel locations of the translucent object in the first image frame and the second image frame. The optical flow algorithm interface may return the motion vector of the pixel locations of the translucent object between the first image frame and the second image frame to the motion estimation module.

S406: The motion estimation module may obtain, from the graphics interface, native motion vector information of the game application, and determine, from the native motion vector information, a motion vector of the pixel locations of the opaque object between the first image frame and the second image frame.

For example, the motion estimation module may obtain the native motion vector information of the game application from the graphics interface by using a "glGetUniformLocation" instruction.

The motion estimation module may determine, from the native motion vector information based on the pixel location of the opaque object in the first image frame and the pixel location thereof in the second image frame, a motion vector of the pixel locations of the opaque object between the first image frame and the second image frame.

Optionally, after the motion estimation module determines the motion vector information between the first image frame and the second image frame, step S407 may be performed.

S407: The frame interpolation module may generate a target image frame based on the first image frame, the second image frame, and the motion vector information between the first image frame and the second image frame.

After obtaining the motion vector information between the first image frame and the second image frame and sent by the motion estimation module, the frame interpolation module may interpolate the target image frame between the first image frame and the second image frame, or may interpolate the target image frame after the first image frame and the second image frame.

When the frame interpolation module determines to interpolate the target image frame between the first image frame and the second image frame, the frame interpolation module may generate the target image frame based on the first image frame, the second image frame, and the motion vector information between the first image frame and the second image frame.

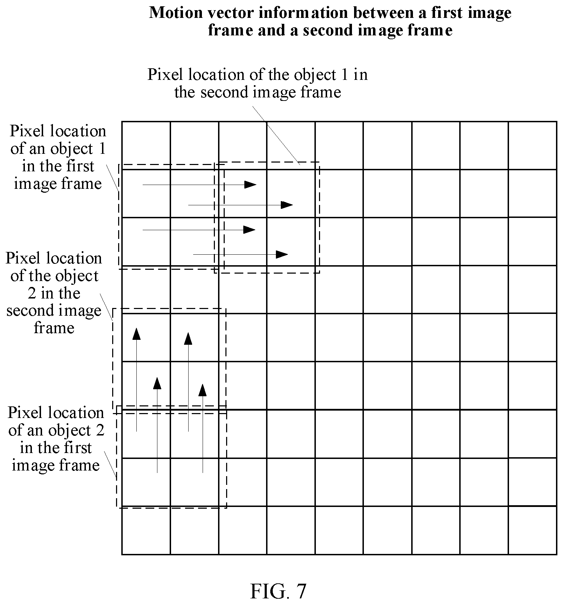

For example, as shown in FIG. 7, the motion vector information between the first image frame and the second image frame may include a motion vector of an object 1 and a motion vector of an object 2. A pixel location of the object 1 in the first image frame includes a [2, 1]th pixel, a [2, 2]th pixel, a [3, 1]th pixel, and a [3, 2]th pixel. A pixel location of the object 1 in the second image frame includes a [2, 3]th pixel, a [2, 4]th pixel, a [3, 3]th pixel, and a [3, 4]th pixel. The motion vector of the object 1 indicates that the object 1 moves rightward by two pixel locations.

Pixel locations of the object 2 in the first image frame include a [7, 1]th pixel, a [7, 2]th pixel, a [7, 1]th pixel, and a [7, 2]th pixel. The pixel location of the object 2 in the second image frame includes a [5, 1]th pixel, a [5, 2]th pixel, a [6, 1]th pixel, and a [6, 2]th pixel. The motion vector of the object 2 indicates that the object 2 moves upward by two pixel locations.

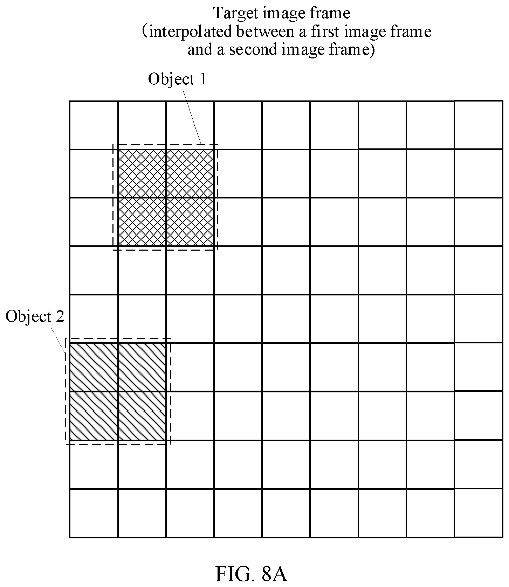

As shown in FIG. 8A, when the frame interpolation module determines to interpolate the target image frame between the first image frame and the second image frame, the object 1 needs to move rightward by one pixel location, and the object 2 needs to move upward by one pixel location from the first image frame to the target image frame. Therefore, pixel locations of the object 1 in the target image frame include a [2, 2]th pixel, a [2, 3]th pixel, a [3, 2]th pixel, and a [3, 3]th pixel. Pixel locations of the object 2 in the target image frame include a [6, 1]th pixel, a [6, 2]th pixel, a [7, 1]th pixel, and a [7, 2]th pixel.

When the frame interpolation module determines to generate the target image frame after the second image frame, the frame interpolation module may generate the target image frame based on the second image frame and the motion vector information between the first image frame and the second image frame.

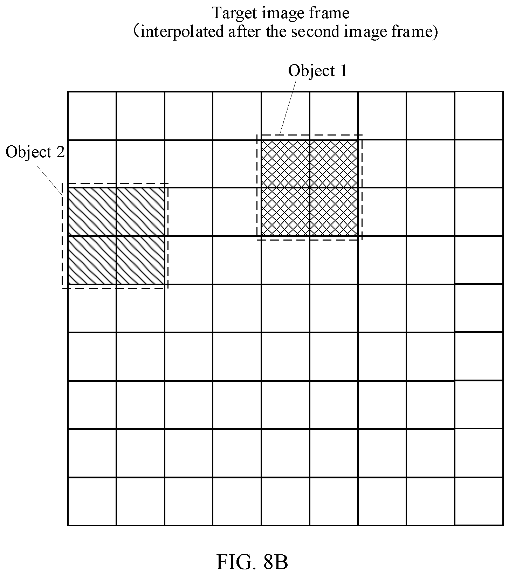

As shown in FIG. 8B, when the frame interpolation module determines to generate the target image frame after the second image frame, the object 1 needs to move rightward by two pixel locations, and the object 2 needs to move upward by two pixel locations from the second image frame to the target image frame. Therefore, pixel locations of the object 1 in the target image frame include a [2, 5]th pixel, a [2, 6]th pixel, a [3, 5]th pixel, and a [3, 6]th pixel. Pixel locations of the object 2 in the target image frame include a [3, 1]th pixel, a [3, 2]th pixel, a [4, 1]th pixel, and a [4, 2]th pixel.

The foregoing examples are merely for describing this application and does not constitute a limitation on this application.

According to the image motion estimation method provided in the embodiments of this application, rendering instructions applied to rendering objects in image frames by an application may be intercepted, and for different types of rendering objects, different motion estimation methods are used. In this way, different motion estimation methods are applicable to different rendering objects. For example, an effect of the optical flow motion estimation method is relatively robust, and may be effective in most motion scenarios. However, when a moving speed of an object in an image frame is relatively fast, an error may occur on an optical flow motion estimation result. The 3D playfield motion estimation method can still ensure a relatively accurate motion estimation result when a motion speed of an object in an image frame is relatively fast. However, the 3D playfield motion estimation method cannot be used in motion estimation of a translucent object. Native playfield vector information of an application is determined by using the 3D playfield motion estimation method. Compared with using a same motion estimation method for different rendering objects, using different estimation methods for different types of rendering objects can improve the accuracy of a motion estimation result between two adjacent image frames.

For example, the motion vector of the first object between the two adjacent image frames is determined by using an optical flow motion estimation method, and the motion vector of the first object between the two adjacent image frames is obtained from a native motion vector of an application. In this embodiment of this application, the first object may be a translucent object, and the second object may be an opaque object. In other embodiments, there may be other types of divisions for the first object and the second object.

Application scenario 2:

Due to the fact that the motion estimation module cannot directly obtain a playfield motion vector from intercepted rendering instructions for rendering objects in image frames by a game application, the motion estimation module may obtain a transform matrices and depth information of two adjacent image frames by intercepting the rendering instructions for the rendering objects in the image frames by the game application. The motion estimation module may determine the playfield motion vector of pixel locations of a static object between the two adjacent image frames by using the transform matrices and the depth information of the two adjacent image frames. The motion estimation module may calculate optical flow information between the two adjacent image frames, and determine a motion vector of pixel locations of a dynamic object between the two adjacent image frames by using the optical flow information.

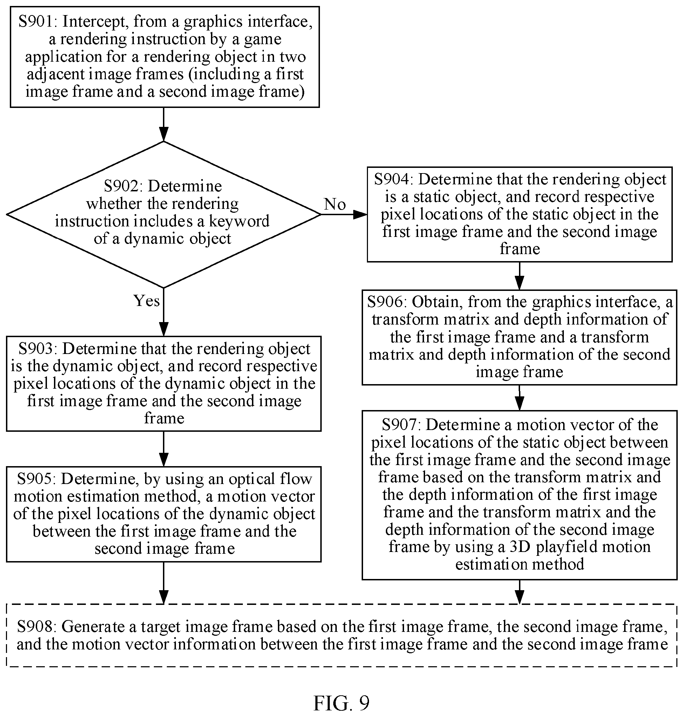

FIG. 9 is a schematic flowchart of an image motion estimation method according to another embodiment of this application.

As shown in FIG. 9, the image motion estimation method may include the following steps.

S901: A motion estimation module may intercept, from a graphics interface, a rendering instruction by a game application for a rendering object in two adjacent image frames.

The two adjacent image frames include a first image frame and a second image frame. A rendering time of the second image frame is after a rendering time of the first image frame.

For the specific content, refer to step S401 in the embodiment in FIG. 4, and details are not described herein again.

S902: The motion estimation module may determine whether the rendering instruction includes a keyword of a dynamic object.

For example, the motion estimation module may intercept a "glLabelObjectEXT" instruction in the rendering instruction, and the motion estimation module may determine whether there is a keyword (such as a character, a wild monster, or a shadow) of a dynamic object in a label (label) carried in the "glLabelObjectEXT" instruction. If so, the motion estimation module may determine that a rendering object corresponding to the "glLabelObjectEXT" instruction as a dynamic object. If not, the motion estimation module may determine that a rendering object corresponding to the "glLabelObjectEXT" instruction is a static object.

S903: If the rendering instruction includes the keyword of the dynamic object, the motion estimation module may determine that the rendering object is the dynamic object, and record pixel locations of the dynamic object in the first image frame and the second image frame.

S904: If the rendering instruction does not include the keyword of the dynamic object, the motion estimation module may determine that the rendering object is a static object, and record pixel locations of the static object in the first image frame and the second image frame.

In a process of rendering the first image frame, the motion estimation module may intercept a rendering instruction of the first image frame, and identify and record a pixel location of the dynamic object in the first image frame. In a process of rendering the second image frame, the motion estimation module may intercept a rendering instruction of the second image frame, and identify and record a pixel location of the dynamic object in the second image frame.

Specifically, in the process of rendering the first image frame, the motion estimation module may start a stencil test (stencil test) and create a stencil buffer (stencil buffer) C. An $[i, j]^{th}$ stencil value in a stencil buffer C corresponds to an [i,

jj]th pixel location in the first image frame. i represents a row in which the pixel location is located, and j represents a column in which the pixel location is located. i and j are positive integers. The motion estimation module may record, in the stencil buffer C, a stencil value of a pixel location corresponding to the dynamic object in the first image frame as $St_{dyna}$, a stencil value of a pixel location corresponding to an opaque object in the first image frame as $St_{sta}$. For example, $St_{dyna}$ may be set to 0, and $St_{sta}$ may be set to 1.

In an example, for a stencil value in the stencil buffer C, refer to the stencil value in the stencil buffer A in the embodiment shown in FIG. 5.

In the process of rendering the second image frame, the motion estimation module may start a stencil test (stencil test) and create a stencil buffer (stencil buffer) D. An [i, j]th stencil value in a stencil buffer D corresponds to an [i, j]th pixel location in the second image frame. i represents a row in which the pixel location is located, and j represents a column in which the pixel location is located. i and j are positive integers. The motion estimation module may record, in the stencil buffer D, a stencil value of a pixel location corresponding to the dynamic object in the second image frame as $St_{dyna}$, a stencil value of a pixel location corresponding to an opaque object in the second image frame as $St_{sta}$. For example, $St_{dyna}$ may be set to 0, and $St_{sta}$ may be set to 1.

In an example, for a stencil value in the stencil buffer D, refer to the stencil value in the stencil buffer B in the embodiment shown in FIG. 6.

S905. The motion estimation module may determine, by using an optical flow motion estimation method, a motion vector of the pixel locations of the dynamic object between the first image frame and the second image frame.

The motion estimation module records the pixel locations of the dynamic object in the first image frame and the second image frame by using the stencil buffer C and the stencil buffer D respectively. Therefore, the motion estimation module may intercept the rendering instruction on the graphics interface, to obtain a buffer of the first image frame and a buffer of the second image frame. The motion estimation module may take out the rendered first image frame from the buffer of the first image frame, and extract the rendered second image frame from the buffer of the second image frame. The motion estimation module may determine a pixel location of a dynamic object in the first image frame based on the stencil buffer C and the first image frame, and determine a pixel location of a dynamic object in the second image frame based on the stencil buffer D and the second image frame.

The motion estimation module may determine optical flow information of the dynamic object between the first image frame and the second image frame by using an optical flow motion estimation method based on the first image frame, the second image frame, and the respective pixel locations of the dynamic object in the first image frame and the second image frame.

The motion estimation module may determine, based on optical flow information of the dynamic object between the first image frame and the second image frame, a motion vector of the pixel locations of the dynamic object between the first image frame and the second image frame.

The motion estimation module may determine the optical flow information of the dynamic object between the first image frame and the second image frame by using an optical flow motion estimation method such as a pyramid optical flow method, a Lucas-Kanade (Lucas-Kanade) method, or a neural network-based optical flow method (FlowNet/FlowNet 2.0).

In a possible implementation, the motion estimation module may provide the first image frame and the second image frame to an optical flow algorithm interface provided by an SoC. The optical flow algorithm interface may calculate optical flow motion vector information of two adjacent image frames by using an optical flow motion estimation method, and return optical flow motion vector information between a first image frame and a second image frame to the motion estimation module. The motion estimation module may determine, based on the respective pixel locations of the dynamic object in the first image frame and the second image frame and from optical flow motion vector information between the first image frame and the second image frame, a motion vector of the pixel locations of the dynamic object between the first image frame and the second image frame.

In a possible implementation, the motion estimation module may provide the first image frame, the second image frame, and the respective pixel locations of the dynamic object in the first image frame and the second image frame to an optical flow algorithm interface provided by an SoC. The optical flow algorithm interface may determine a motion vector of the pixel locations of the dynamic object between the first image frame and the second image frame based on the first image frame, the second image frame, and the respective pixel locations of the dynamic object in the first image frame and the second image frame. The optical flow algorithm interface may return the motion vector of the pixel locations of the dynamic object between the first image frame and the second image frame to the motion estimation module.

S906: The motion estimation module may obtain, from the graphics interface, a transform matrix and depth information of the first image frame and a transform matrix and depth information of the second image frame.

The motion estimation module may intercept a related instruction such as a "glBufferSubData" instruction or a "glGetUniformLocation" instruction in the rendering instruction on the graphics interface, to obtain the transform matrix and the depth information of the first image frame and the transform matrix and the depth information of the second image frame.

The transform matrix of the first image frame is used for representing a transform relationship of converting the first image frame from a viewing angle coordinate system of the first image frame to a world coordinate system. The transform matrix of the second image frame is used for representing a transform relationship of converting the second image frame from a viewing angle coordinate system of the first image frame to a world coordinate system.

S907: The motion estimation module may determine a motion vector of the pixel locations of the static object between the first image frame and the second image frame based on the transform matrix and the depth information of the first image frame and the transform matrix and the depth information of the second image frame by using a 3D playfield motion estimation method.

Due to the fact that the motion vector of the static object in the first image frame is generated due to a change in a viewing angle of the first image frame and a viewing angle of the second image frame, the motion estimation module may re-project the depth information of the second image frame to viewing angle coordinates of the first image frame, to obtain the depth information of the second image frame in the viewing angle coordinate system of the first image frame. The motion estimation module may determine the motion vector of the static object between the first image frame and the second image frame based on the depth information of the second image frame in the viewing angle coordinate system of the first image frame and the depth information of the first image frame.

A calculation formula of the motion vector of the static object between the first image frame and the second image frame may be as follows:

$$v_{3D-S} = VP_{n-1}VP_n^T d_{cur-S} - d_{pre-S} \qquad \text{formula (1).}$$

In the foregoing formula (1), $v_{3D-S}$ is the motion vector of the pixel locations of the static object between the first image frame and the second image frame, $VP_{n-1}$ is the transform matrix of the first image frame, and $VP_n^T$ is a transpose matrix of the transform matrix of the second image frame. $d_{cur-S}$ is a depth value of the pixel location of the static object in the second image frame. $d_{pre-S}$ is a depth value of the pixel location of the static object in the first image frame.

Optionally, after the motion estimation module determines the motion vector information between the first image frame and the second image frame, step S908 may be performed.

S908: The frame interpolation module may generate a target image frame based on the first image frame, the second image frame, and the motion vector information between the first image frame and the second image frame.

For the specific content, refer to step S407 in the embodiment in FIG. 4, and details are not described herein again.

According to the image motion estimation method provided in this application, rendering instructions applied to rendering objects in image frames by a game application may be intercepted, and for different types of rendering objects, different motion estimation methods are used. In this way, different motion estimation methods are applicable to different rendering objects. For example, an effect of the optical flow motion estimation method is relatively robust, and may be effective in most motion scenarios. The 3D playfield motion estimation method can still ensure a relatively accurate motion estimation result when a motion speed of an object in an image frame is relatively fast. However, calculation of a motion vector of a dynamic object by using a 3D playfield estimation method is relatively complex, and takes a relatively long calculation time. Compared with using a same motion estimation method for different rendering objects, using different estimation methods for different types of rendering objects may quickly determine a motion estimation result between two adjacent image frames.

For example, the motion vector of the first object between the two adjacent image frames is determined by using an optical flow motion estimation method, and the motion vector of the first object between two adjacent image frames is determined by using a 3D playfield motion estimation method. In this embodiment of this application, the first object may be a dynamic object, and the second object may be a static object. In other embodiments, there may be other types of divisions for the first object and the second object.

Application scenario 3:

Due to the fact that the motion estimation module cannot directly obtain a playfield motion vector from intercepted rendering instructions for rendering objects in image frames by a game application, In addition, in some game applications, labels defined for rendering objects in image frames are different, resulting in that the motion estimation module cannot identify object types in the image frames. Therefore, the motion estimation module may determine motion vector information between the two adjacent image frames through the transform matrix and the depth information of the two adjacent image frames by combining an optical flow motion estimation method and a 3D playfield motion estimation method.

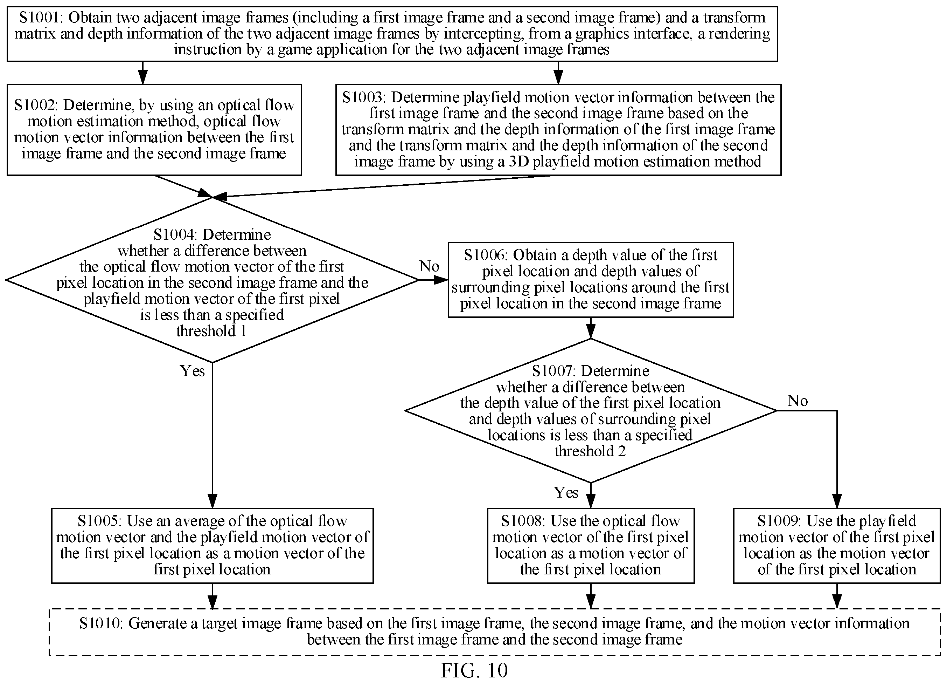

FIG. 10 is a schematic flowchart of an image motion estimation method according to another embodiment of this application.

As shown in FIG. 10, the image motion estimation method may include the following steps.

S1001: A motion estimation module may obtain two adjacent image frames and a transform matrix and depth information of the two adjacent image frames by intercepting, from a graphics interface, a rendering instruction by a game application for the two adjacent image frames.

The motion estimation module may intercept a related instruction such as a "glBufferSubData" instruction or a "glGetUniformLocation" instruction in the rendering instruction on the graphics interface, to obtain the transform matrix and the depth information of the first image frame and the transform matrix and the depth information of the second image frame.

The transform matrix of the first image frame is used for representing a transform relationship of converting the first image frame from a viewing angle coordinate system of the first image frame to a world coordinate system. The transform matrix of the second image frame is used for representing a transform relationship of converting the second image frame from a viewing angle coordinate system of the first image frame to a world coordinate system.

The depth information of the first image frame includes depth values of pixel locations in the first image frame. The depth information of the second image frame includes depth values of pixel locations in the second image frame.

S1002: The motion estimation module may determine, by using an optical flow motion estimation method, optical flow motion vector information between the first image frame and the second image frame.

The motion estimation module may determine the optical flow motion vector information between the first image frame and the second image frame by using an optical flow motion estimation method such as a pyramid optical flow method, a Lucas-Kanade (Lucas-Kanade) method, or a neural network-based optical flow method (FlowNet/FlowNet 2.0).

In a possible implementation, the motion estimation module may provide the first image frame and the second image frame to an optical flow algorithm interface provided by an SoC. The optical flow algorithm interface may calculate optical flow motion vector information of two adjacent image frames by using an optical flow motion estimation method, and return optical flow motion vector information between a first image frame and a second image frame to the motion estimation module.

The optical flow motion vector information between the first image frame and the second image frame may include an optical flow motion vector of each pixel location in the second image frame between the first image frame and the second image frame.

S1003: The motion estimation module may determine playfield motion vector information between the first image frame and the second image frame based on the transform matrix and the depth information of the first image frame and the transform matrix and the depth information of the second image frame by using a 3D playfield motion estimation method.

The motion estimation module may re-project the depth information of the second image frame to viewing angle coordinates of the first image frame, to obtain the depth information of the second image frame in the viewing angle coordinate system of the first image frame. The motion estimation module may determine playfield motion vector information between the first image frame and the second image frame based on the depth information of the second image frame in the viewing angle coordinate system of the first image frame and the depth information of the first image frame.

The playfield motion vector information between the first image frame and the second image frame may include a playfield motion vector of each pixel location in the second image frame between the first image frame and the second image frame.

A formula for calculating the playfield motion vector of the first pixel location in the second image frame between the first image frame and the second image frame may be as follows:

$$v_{3D} = VP_{n-1}VP_n^T d_{cur} - d_{pre} \qquad \text{formula (2).}$$

In the foregoing formula (2), $v_{3D}$ is the playfield motion vector of the first pixel location in the second image frame between the first image frame and the second image frame, $VP_{n-1}$ is a transform matrix of the first image frame, and $VP_n^T$ is a transpose matrix of the transform matrix of the second image frame. $d_{cur}$ is a depth value of the first pixel location in the second image frame. $d_{pre}$ is a depth value obtained by re-projecting the first pixel location in the second image frame onto a second pixel location in the first image frame.

The first pixel location may be any pixel location in the second image frame. Therefore, the playfield motion vector of any pixel location in the second image frame between the first image frame and the second image frame may be determined based on the foregoing formula (2).

S1004: The motion estimation module may determine whether a difference between the optical flow motion vector of the first pixel location in the second image frame and the playfield motion vector of the first pixel location is less than a specified threshold 1.

If the difference between the optical flow motion vector of the first pixel location in the second image frame and the playfield motion vector of the first pixel location is less than the specified threshold 1, step S1005 is performed.

If the difference between the optical flow motion vector at the first pixel location in the second image frame and the playfield motion vector at the first pixel location is greater than or equal to the specified threshold 1, step S1006 to step S1009 are performed.

S1005: The motion estimation module may use an average of the optical flow motion vector and the playfield motion vector of the first pixel location as a motion vector of the first pixel location.

If the difference between the optical flow motion vector of the first pixel location and the playfield motion vector of the first pixel location is less than the specified threshold 1, it may be considered that, at the first pixel location, the optical flow motion vector determined by using the optical flow motion estimation method is consistent with the playfield motion vector determined by using the 3D playfield motion estimation method. Therefore, the average of the optical flow motion vector and the playfield motion vector of the first pixel location may be used as a motion vector of the first pixel location.

That is:

$$v_{out}=(v_{3D}+v_{2D})/2 \qquad\qquad \text{Formula (3)}$$

where in the foregoing formula (3), $v_{out}$ is the playfield motion vector of the first pixel location in the second image frame between the first image frame and the second image frame, $v_{3D}$ is the playfield motion vector of the first pixel location in the second image frame between the first image frame and the second image frame, $v_{2D}$ is the optical flow motion vector of the first pixel location in the second image frame between the first image frame and the second image frame.

S1006: The motion estimation module may obtain a depth value of the first pixel location and depth values of surrounding pixel locations around the first pixel location in the second image frame.

If the difference between the optical flow motion vector of the first pixel location and the playfield motion vector of the first pixel location is greater than or equal to the specified threshold 1, it may be considered that, at the first pixel location, the optical flow motion vector determined by using the optical flow motion estimation method is quite different from the playfield motion vector determined by using the 3D playfield motion estimation method. Therefore, whether the difference between the depth value of the first pixel location and depth values of surrounding pixel locations is less than a specified threshold 2 may be determined, to determine whether the motion vector of the first pixel location is a selected optical flow motion vector or a playfield motion vector.

S1007: The motion estimation module may determine whether a difference between the depth value of the first pixel location and depth values of surrounding pixel locations is less than a specified threshold 2.

If the difference between the depth value of the first pixel location and the depth values of the surrounding pixel locations is less than the specified threshold 2, step S1008 is performed.

If the difference between the depth value of the first pixel location and the depth values of the surrounding pixel locations is greater than or equal to the specified threshold 2, step S1009 is performed.

The first pixel location has a plurality of surrounding pixel locations. For example, there may be eight surrounding pixel locations around the first pixel location.

In a possible implementation, when determining whether the difference between the depth value of the first pixel location and depth values of surrounding pixels is less than the specified threshold 2, respective differences between the depth values of the first pixel location and the plurality of surrounding pixel locations may be calculated. If an average of the respective differences between the depth values of the first pixel location and the plurality of surrounding pixel locations is less than the specified threshold 2, it may be determined that the differences between the depth value of the first pixel location and the depth values of the surrounding pixels are less than the specified threshold 2.

In a possible implementation, when determining whether the difference between the depth value of the first pixel location and depth values of surrounding pixels is less than the specified threshold 2, respective differences between the depth values of the first pixel location and the plurality of surrounding pixel locations may be calculated. If all of the differences between the depth values of the first pixel location and the plurality of surrounding pixel locations are less than the specified threshold 2, it may be determined that the differences between the depth value of the first pixel location and the depth values of the surrounding pixels are less than the specified threshold 2.

S1008: The motion estimation module may use the optical flow motion vector of the first pixel location as a motion vector of the first pixel location.

S1009: The motion estimation module may use the playfield motion vector at the first pixel location as the motion vector of the first pixel location.

Due to the fact that a difference between depth values of pixel locations in a translucent object is not large, if the difference between the depth values of a first pixel location and surrounding pixel locations is small, it indicates that an area in which the first pixel location is located may probably be a background (that is, the translucent object). For the translucent object, an accurate motion vector can be obtained by using the optical flow motion estimation method. Therefore, if the difference between the depth value of the first pixel location and the depth values of the surrounding pixels is less than the specified threshold 2, the optical flow motion vector $v_{2D}$ of the first pixel location may be used as the motion vector $v_{out}$ of the first pixel location, that is, $v_{out} = v_{2D}$.

Due to the fact that depth values of pixel locations of an opaque object are greatly different from each other, if a depth value of a first pixel location is greatly different from depth values of surrounding pixel locations, it indicates that an area in which the first pixel location is located may probably be an opaque object. For the opaque object, an accurate motion vector can be obtained by using the 3D playfield motion estimation method. Therefore, if the difference between the depth value of the first pixel location and the depth values of the surrounding pixels is greater than the specified threshold 2, the playfield motion vector $v_{3D}$ of the first pixel location may be used as the motion vector $v_{out}$ of the first pixel location, that is, $v_{out} = v_{2D}$.

In some embodiments, due to the fact that a difference between optical flow motion vectors of pixel locations in a translucent object is not large, if the difference between optical flow motion vectors of a first pixel location and surrounding pixel locations is small, it indicates that an area in which the first pixel location is located may probably be a background (that is, the translucent object). For the translucent object, an accurate motion vector can be obtained by using the optical flow motion estimation method. Therefore, if the difference between the optical flow motion vector of the first pixel location and the optical flow motion vectors of the surrounding pixels is less than a specified threshold 3, the optical flow motion vector $v_{2D}$ of the first pixel location may be used as the motion vector $v_{out}$ of the first pixel location, that is, $v_{out} = v_{2D}$.

Due to the fact that optical flow motion vectors of pixel locations of an opaque object are greatly different from each other, if an optical flow motion vector of a first pixel location is greatly different from those of surrounding pixel locations, it indicates that an area in which the first pixel location is located may probably be an opaque object. For the opaque object, an accurate motion vector can be obtained by using the 3D playfield motion estimation method. Therefore, if the difference between the optical flow motion vector of the first pixel location and the optical flow motion vectors of the surrounding pixels is greater than or equal to the specified threshold 3, the playfield motion vector $v_{3D}$ of the first pixel location may be used as the motion vector $v_{out}$ of the first pixel location, that is, $v_{out} = v_{2D}$.

In some other embodiments, whether the first pixel location pertains to a translucent object or an opaque object may be determined by comprehensively considering the depth value difference and the optical flow motion vector difference of the first pixel location, to determine whether the motion vector of the first pixel location is an optical flow motion vector or a playfield motion vector.

If the difference between the depth value of the first pixel location and the depth values of the surrounding pixels is less than the specified threshold 2, and the difference between the optical flow motion vector of the first pixel location and the optical flow motion vector of the surrounding pixels is less than the specified threshold 3, the difference between the optical flow motion vector $v_{2D}$ of the first pixel location and the optical flow motion vector of the surrounding pixels may be used as the motion vector $v_{out}$ of the first pixel location, that is, $v_{out} = v_{2D}$.

If the difference between the depth value of the first pixel location and the depth values of the surrounding pixels is greater than or equal to the specified threshold 2, or the difference between the optical flow motion vector of the first pixel location and the optical flow motion vector of the surrounding pixels is greater than or equal to the specified threshold 3, the optical flow motion vector $v_{2D}$ of the first pixel location is used as the motion vector $v_{out}$ of the first pixel location, that is, $v_{out} = v_{2D}$.

Optionally, after the motion estimation module determines the motion vector information between the first image frame and the second image frame, step S1010 may be performed.

S1010: The frame interpolation module may generate a target image frame based on the first image frame, the second image frame, and the motion vector information between the first image frame and the second image frame.

For the specific content, refer to step S407 in the embodiment in FIG. 4, and details are not described herein again.

Therefore, according to the image motion estimation method provided in the embodiments of this application, motion estimation can be performed on two adjacent image frames by combining transform matrix and depth information of the two adjacent image frames with an optical flow motion estimation method and a 3D playfield motion estimation method, to determine motion vector information between the two adjacent image frames. In this way, the accuracy of a motion estimation result can be improved.

In the foregoing embodiments of this application, the motion estimation module may first determine whether the native motion vector information of the first application is capable of being obtained from the graphics interface, if the native motion vector information of the first application is capable of being obtained from the graphics interface, the method embodiment shown in FIG. 4 is performed, and if the native motion vector information of the first application cannot be obtained from the graphics interface, the method embodiment shown in FIG. 9 is performed.

Optionally, the motion estimation module may first determine whether the native motion vector information of the first application and a keyword of the rendering object is capable of being obtained from the graphics interface. If the native motion vector information of the first application and the key word of the rendering object is capable of being obtained from the graphics interface, the method embodiment shown in FIG. 4 is performed. If the keyword of the rendering object can be obtained, but the native motion vector information of the first application cannot be obtained from the graphics interface, the method embodiment shown in FIG. 9 is executed. If the keyword of the rendering object cannot be obtained, and the native motion vector information of the first application cannot be obtained from the graphics interface, the method embodiment shown in FIG. 10 is executed.

In this embodiments of this application, in addition to being applied to image frame interpolation in a game application, motion vector information between two adjacent image frames that is determined by using the foregoing image motion estimation method may further be used in another scenario. This is not limited in this embodiment of this application, for example, image frame interpolation in an XR application, and motion object prediction in autonomous driving. In an XR application or an autonomous driving scenario, two adjacent image frames may be obtained by using a camera, and depth information of the two adjacent image frames is acquired by using a depth sensor, so that playfield information and optical flow information in the two adjacent image frames may be determined. Still for example, the motion vector information between two adjacent image frames determined by using the foregoing image motion estimation method may further perform motion estimation on a game application without a built-in motion blur function, to implement a motion blur function.

An embodiment of this application further provides a computer-readable storage medium. The computer-readable storage medium stores a computer program. When the computer program is executed by a processor, the steps in the foregoing method embodiments can be implemented.

An embodiment of this application further provides a computer program product. When the computer program product is executed on an electronic device, the steps in the foregoing method embodiments can be implemented.

An embodiment of this application further provides a chip system. The chip system includes a processor. The processor is coupled to a memory. The processor executes a computer program stored in the memory, to implement the steps in any one of the foregoing method embodiments of this application. The chip system may be a single chip or a chip module including a plurality of chips.

The term "user interface (UI)" in the specification and accompanying drawings of this application is a medium interface that performs interaction and information exchange between an application program or an operating system and a user, and implements conversion between an internal form of information and a form that can be accepted by a user. The user interface of the application program is source code compiled by using a specific computer language such as java or an extensible markup language (XML). The interface source code is parsed and rendered on a terminal device, and is finally presented as content that can be identified by a user, for example, a control such as a picture, a text, or a button. A control is also referred to as a widget, and is a basic element of a user interface. A typical control includes a toolbar, a menu bar, a text box, a button, a scrollbar, a picture, and text. An attribute and content of a control in an interface are defined by using a tag or a node. For example, in the XML, a control included in an interface is specified by using a node such as <Textview>, <ImgView>, or <VideoView>. One node corresponds to one control or attribute in an interface, and after parsing and rendering, the node presents content visible to a user. In addition, interfaces of many application programs, for example, a hybrid application, usually further include web pages. A web page, also referred to as a page, may be understood as a special control embedded in an application programming interface. A web page is source code compiled by using a specific computer language, for example, a hyper text markup language (hyper text markup language, HTML), cascading style sheets (cascading style sheets, CSS), or a java script (JavaScript, JS). The web page source code may be loaded and displayed as user-identifiable content by a browser or a web page display component having a function similar to that of a browser. Specific content included in a web page is also defined by using a tag or a node in web page source code. For example, elements and attributes of a web page are defined by using <p>, <img>, <video>, and <canvas> in the HTML.

A common representation form of a user interface is a graphic user interface (graphic user interface, GUI), which refers to a user interface related to a computer operation and displayed in a graphic manner, and may be an interface element such as an icon, a window, and a control displayed on a display of an electronic device. The control may include visible interface elements such as icons, buttons, menus, tabs, text boxes, dialog boxes, status bars, navigation bars, and widgets.

All or some of the foregoing embodiments may be implemented by using software, hardware, firmware, or any combination thereof. When software is used to implement the embodiments, all or some of the embodiments may be implemented in the form of a computer program product. The computer program product includes one or more computer instructions. When the computer program instructions are loaded and executed on a computer, all or some of the processes or functions according to the embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, through a coaxial cable, an optical fiber, or a digital subscriber line) or in a wireless manner (for example, through infrared rays, radio, or microwave). The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art can understand that all or some of the processes of the methods in the foregoing embodiments may be implemented by a computer program instructing related hardware. The program may be stored in a computer-readable storage medium. When the program is executed, the processes in the foregoing method embodiments may be included. The foregoing storage medium includes: any medium that can store program code, such as a ROM, a random access memory RAM, a magnetic disk, or an optical disc.

The foregoing embodiments are merely intended for describing the technical solutions of this application, but not for limiting this application. Although this application is described in detail with reference to the foregoing embodiments, a person of ordinary skill in the art is to understand that modifications may still be made to the technical solutions described in the foregoing embodiments or equivalent replacements may be made to some technical features thereof, as long as such modifications or replacements do not cause the essence of corresponding technical solutions to depart from the spirit and scope of the technical solutions of the embodiments of this application.

**Claims**

1. An image motion estimation method, applied to an electronic device, a first application being installed on the electronic device, and the method comprising:

   obtaining a rendering instruction delivered by the first application, the rendering instruction being used for instructing a graphics processing unit GPU to render image frames of the first application, and the image frames of the first application comprising a first image frame and a second image frame;
   identifying, from the rendering instruction, a pixel location of a first object in the first image frame and a pixel location of a second object in the first image frame, where types of the first object and the second object are different;
   identifying, from the rendering instruction, a pixel location of the first object in the second image frame and a pixel location of the second object in the second image frame;
   determining a motion vector of the pixel locations of the first object between the first image frame and the second image frame by using an optical flow motion estimation method; and
   obtaining native motion vector information of the first application, and determining, from the native motion vector information, a motion vector of the pixel locations of the second object between the first image frame and the second image frame.

2. The method according to claim 1, wherein the electronic device comprises a motion estimation module;
   the obtaining a rendering instruction delivered by the first application specifically comprises:

   obtaining, by the motion estimation module from a graphics interface, the rendering instruction delivered by the first application; and
   the obtaining native motion vector information of the first application, and determining, from the native motion vector information, a motion vector of the pixel locations of the second object between the first image frame and the second image frame specifically comprises:
   obtaining, by the motion estimation module from the graphics interface, the native motion vector information of the first application, and determining, from the native motion vector information, the motion vector of the pixel locations of the second object between the first image frame and the second image frame.

3. The method according to claim 2, wherein the electronic device further comprises an optical flow algorithm interface;
   the determining a motion vector of the pixel locations of the first object between the first image frame and the second image frame by using an optical flow motion estimation method specifically comprises:

   determining, by the optical flow algorithm interface, optical flow motion vector information between the first image frame and the second image frame;
   sending, by the optical flow algorithm interface, the optical flow motion vector information between the first image frame and the second image frame to the motion estimation module; and
   determining, by the motion estimation module from the optical flow motion vector information between the first image frame and the second image frame, the motion vector of the pixel locations of the first object between the first image frame and the second image frame based on the pixel location of the first object in the first image frame and the pixel location of the first object in the second image frame.

4. The method according to claim 2, wherein the electronic device further comprises an optical flow algorithm interface;
   the determining a motion vector of the pixel locations of the first object between the first image frame and the second image frame by using an optical flow motion estimation method specifically comprises:

determining, by the optical flow algorithm interface, an optical flow motion vector of the pixel locations of the first object between the first image frame and the second image frame based on the pixel location of the first object in the first image frame, the pixel location of the second object in the second image frame, the first image frame, and the second image frame;

sending, by the optical flow algorithm interface, the optical flow motion vector of the pixel locations of the first object between the first image frame and the second image frame to the motion estimation module; and

using, by the motion estimation module, the optical flow motion vector of the pixel locations of the first object between the first image frame and the second image frame as the motion vector of the pixel locations of the first object between the first image frame and the second image frame.

5. The method according to claim 3 or 4, wherein the method further comprises:

obtaining, by the motion estimation module from the graphics interface, a buffer address of the first image frame and a buffer address of the second image frame;

sending, by the motion estimation module, the buffer address of the first image frame and the buffer address of the second image frame to the optical flow algorithm interface; and

obtaining, by the optical flow algorithm interface, the first image frame from the buffer address of the first image frame, and obtaining the second image frame from the buffer address of the second image frame.

6. The method according to any one of claims 1 to 5, wherein the native motion vector information is playfield motion vector information between the first image frame and the second image frame and determined by the first application by using a 3D playfield estimation method.

7. The method according to any one of claims 1 to 6, wherein the electronic device further comprises a frame interpolation module; and the method further comprises:

sending, by the motion estimation module, the first image frame, the second image frame, and the motion vector information between the first image frame and the second image frame to the frame interpolation module; and

generating, by the frame interpolation module, a target image frame based on the first image frame, the second image frame, and the motion vector information between the first image frame and the second image frame, wherein the motion vector information comprises the motion vector of the pixel locations of the first object between the first image frame and the second image frame, and the motion vector of the pixel locations of the second object between the first image frame and the second image frame.

8. The method according to any one of claims 1 to 7, wherein before the identifying, from the rendering instruction, a pixel location of a first object in the first image frame and a pixel location of a second object in the first image frame, the method further comprises:

determining, by the motion estimation module, that the native motion vector information is capable of being obtained from the graphics interface.

9. The method according to any one of claims 1 to 7, wherein the first object is a translucent object, and the second object is an opaque object.

10. An image motion estimation method, applied to an electronic device, a first application being installed on the electronic device, and the method comprising:

obtaining a rendering instruction delivered by the first application, the rendering instruction being used for instructing a GPU to render image frames of the first application, and the image frames of the first application comprising a first image frame and a second image frame;

identifying, from the rendering instruction, a pixel location of a first object in the first image frame and a pixel location of a second object in the first image frame, wherein types of the first object and the second object are different;

identifying, from the rendering instruction, a pixel location of the first object in the second image frame and a pixel location of the second object in the second image frame;

determining a motion vector of the pixel locations of the first object between the first image frame and the second image frame by using an optical flow motion estimation method;

obtaining a first transform matrix and first depth information of the first image frame, and a second transform matrix and second depth information of the second image frame; and

determining a motion vector of the pixel locations of the second object between the first image frame and the second image frame by using a 3D playfield motion estimation method based on the first transform matrix, the first depth information, the second transform matrix, and the second depth information.

11. The method according to claim 10, wherein the electronic device comprises a motion estimation module; the obtaining a rendering instruction delivered by the first application specifically comprises:

obtaining, by the motion estimation module from a graphics interface, the rendering instruction delivered by the first application; and

the obtaining a first transform matrix and first depth information of the first image frame, and a second transform matrix and second depth information of the second image frame specifically comprises:

obtaining, by the motion estimation module from the graphics interface, a first transform matrix and first depth information of the first image frame, and a second transform matrix and second depth information of the second image frame.

12. The method according to claim 11, wherein the electronic device further comprises an optical flow algorithm interface; the determining a motion vector of the pixel locations of the first object between the first image frame and the second image frame by using an optical flow motion estimation method specifically comprises:

determining, by the optical flow algorithm interface, optical flow motion vector information between the first image frame and the second image frame;

sending, by the optical flow algorithm interface, the optical flow motion vector information between the first image frame and the second image frame to the motion estimation module; and

determining, by the motion estimation module from the optical flow motion vector information between the first image frame and the second image frame, the motion vector of the pixel locations of the first object between the first image frame and the second image frame based on the pixel location of the first object in the first image frame and the pixel location of the first object in the second image frame.

13. The method according to claim 11, wherein the electronic device further comprises an optical flow algorithm interface; the determining a motion vector of the pixel locations of the first object between the first image frame and the second image frame by using an optical flow motion estimation method specifically comprises:

determining, by the optical flow algorithm interface, an optical flow motion vector of the pixel locations of the second object between the first image frame and the second image frame based on the pixel location of the first object in the first image frame, the pixel location of the second object in the second image frame, the first image frame, and the second image frame;

sending, by the optical flow algorithm interface, the optical flow motion vector of the pixel locations of the first object between the first image frame and the second image frame to the motion estimation module; and

using, by the motion estimation module, the optical flow motion vector of the pixel locations of the first object between the first image frame and the second image frame as the motion vector of the pixel locations of the first object between the first image frame and the second image frame.

14. The method according to claim 12 or 13, wherein the method further comprises:

obtaining, by the motion estimation module from the graphics interface, a buffer address of the first image frame and a buffer address of the second image frame;

sending, by the motion estimation module, the buffer address of the first image frame and the buffer address of the second image frame to the optical flow algorithm interface; and

obtaining, by the optical flow algorithm interface, the first image frame from the buffer address of the first image frame, and obtaining the second image frame from the buffer address of the second image frame.

15. The method according to any one of claims 10 to 14, wherein the electronic device further comprises a frame interpolation module; and the method further comprises:

sending, by the motion estimation module, the first image frame, the second image frame, and the motion vector information between the first image frame and the second image frame to the frame interpolation module; and

generating, by the frame interpolation module, a target image frame based on the first image frame, the second image frame, and the motion vector information between the first image frame and the second image frame, wherein the motion vector information comprises the motion vector of the pixel locations of the first object between the first image frame and the second image frame, and the motion vector of the pixel locations of the second object between the first image frame and the second image frame.

16. The method according to any one of claims 10 to 15, wherein the first object is a dynamic object, and the second object is a static object.

17. An electronic device, comprising one or more processors and one or more memories, wherein the one or more memories are coupled to the one or more processors, the one or more memories are configured to store a computer program, and when the one or more processors execute the computer program, the electronic device is enabled to perform the method according to any one of claims 1 to 9 or the method according to any one of claims 10 to 16.

18. A chip system, wherein the chip system is applied to an electronic device, the chip system comprises a processing circuit and an interface circuit, the interface circuit is configured to receive instructions and transmit the instructions to the processing circuit, and the processing circuit is configured to execute the instructions to perform the method according to any one of claims 1 to 9 or the method according to any one of claims 10 to 16.

19. A computer-readable storage medium, comprising a computer program, wherein when the computer program is run on a processor in an electronic device, the electronic device is enabled to perform the method according to any one of claims 1 to 9 or the method according to any one of claims 10 to 16.

Electronic device 100

Antenna 1

Antenna 2

| Mobile communication module 2G/3G/4G/5G [150] | Wireless communication module BT/WLAN/GNSS/NFC/IR/FM [160] |

Speaker [170A]

Receiver [170B]

Audio module [170]

Microphone [170C]

Headset jack [170D]

Displays 1-N [194]

Cameras 1-N [193]

Indicator [192]

Motor [191]

Key [190]

Internal memory [121]

SIM card interfaces 1–N [195]

External memory interface [120]

Processor [110]

Sensor module [180]

Gyro sensor [180B]

Acceleration sensor [180E]

Touch sensor [180K]

FIG. 1

| Application layer | Game application | XR application | Autonomous driving application | ... |

| Native (native) server layer | Open graphics library (OpenGL) | Open graphics library for embedded systems (OpenGL ES) | Drawing application program interface (Vulkan) |
| | Motion estimation module | Frame interpolation module | SurfaceFlinger (SurfaceFlinger) |
| | Optical flow algorithm interface | | |

| Kernel (kernel) layer | Graphics processing unit driver (GPU Driver) |

FIG. 2

**Game application**

Render thread
(Render Thread)

1. Synchronize
picture content
of a game

Main thread
(Main Thread)

2. Rendering
instruction

5. Frame
sending
instruction

**Graphics interface
(OpenGL/OpenGL ES/
Vulkan)**

3. Rendering
instruction

6. Frame
sending
instruction

9. Motion vector
information
between the two
adjacent image
frames and the
two adjacent
image frames

**Motion estimation module**

8. Determine motion vector
information between two
adjacent image frames based on
related resources obtained by
intercepting the rendering
instruction and the frame
sending instruction

**Frame interpolation
module**

10. Generate a target
image frame based on the
motion vector information
between the two adjacent
image frames and the two
adjacent image frames

11. Buffer
address of
the target
image
frame

4. Rendering
instruction

7. Frame sending instruction

**GPU driver**

**SurfaceFlinger
(SurfaceFlinger)**

FIG. 3

S401: Intercept, from a graphics interface, a rendering instruction by a game application for a rendering object in two adjacent image frames (including a first image frame and a second image frame)

S402: Determine whether the rendering instruction includes a keyword of a translucent object

No → S404: Determine that the rendering object is an opaque object, and record respective pixel locations of the opaque object in the first image frame and the second image frame

Yes

S403: Determine that the rendering object is the translucent object, and respectively record respective pixel locations of the translucent object in the first image frame and the second image frame

S406: Obtain, from the graphics interface, native motion vector information of the game application, and determine, from the native motion vector information, a motion vector of the pixel locations of the opaque object between the first image frame and the second image frame

S405: Determine, by using an optical flow motion estimation method, a motion vector of the pixel locations of the translucent object between the first image frame and the second image frame

S407: Generate a target image frame based on the first image frame, the second image frame, and the motion vector information between the first image frame and the second image frame

FIG. 4

First image frame

Stencil buffer A

| 0 | 0 | 0 | 0 | 0 | 0 | 0 | 0 | 0 |
|---|---|---|---|---|---|---|---|---|
| **1** | **1** | 0 | 0 | 0 | 0 | 0 | 0 | 0 |
| **1** | **1** | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| **1** | **1** | 0 | 0 | 0 | 0 | 0 | 0 | 0 |
| **1** | **1** | 0 | 0 | 0 | 0 | 0 | 0 | 0 |
| 0 | 0 | 0 | 0 | 0 | 0 | 0 | 0 | 0 |

FIG. 5

Object 1  Second image frame

Stencil buffer B

| 0 | 0 | 0 | 0 | 0 | 0 | 0 | 0 | 0 |
|---|---|---|---|---|---|---|---|---|
| 0 | 0 | **1** | **1** | 0 | 0 | 0 | 0 | 0 |
| 0 | 0 | **1** | **1** | 0 | 0 | 0 | 0 | 0 |
| 0 | 0 | 0 | 0 | 0 | 0 | 0 | 0 | 0 |
| **1** | **1** | 0 | 0 | 0 | 0 | 0 | 0 | 0 |
| **1** | **1** | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |

FIG. 6

**Motion vector information between a first image
frame and a second image frame**

Pixel location of the object 1 in
the second image frame

Pixel location
of an object 1
in the first
image frame

Pixel location
of the object
2 in the
second image
frame

Pixel location
of an object 2
in the first
image frame

FIG. 7

Target image frame
(interpolated between a first image frame
and a second image frame)

Object 1

Object 2

FIG. 8A

Target image frame
(interpolated after the second image frame)

Object 1

Object 2

FIG. 8B

S901: Intercept, from a graphics interface, a rendering instruction by a game application for a rendering object in two adjacent image frames (including a first image frame and a second image frame)

S902: Determine whether the rendering instruction includes a keyword of a dynamic object

No

S904: Determine that the rendering object is a static object, and record respective pixel locations of the static object in the first image frame and the second image frame

Yes

S903: Determine that the rendering object is the dynamic object, and record respective pixel locations of the dynamic object in the first image frame and the second image frame

S906: Obtain, from the graphics interface, a transform matrix and depth information of the first image frame and a transform matrix and depth information of the second image frame

S905: Determine, by using an optical flow motion estimation method, a motion vector of the pixel locations of the dynamic object between the first image frame and the second image frame

S907: Determine a motion vector of the pixel locations of the static object between the first image frame and the second image frame based on the transform matrix and the depth information of the first image frame and the transform matrix and the depth information of the second image frame by using a 3D playfield motion estimation method

S908: Generate a target image frame based on the first image frame, the second image frame, and the motion vector information between the first image frame and the second image frame

FIG. 9

S1001: Obtain two adjacent image frames (including a first image frame and a second image frame) and a transform matrix and depth information of the two adjacent image frames by intercepting, from a graphics interface, a rendering instruction by a game application for the two adjacent image frames

S1002: Determine, by using an optical flow motion estimation method, optical flow motion vector information between the first image frame and the second image frame

S1003: Determine playfield motion vector information between the first image frame and the second image frame based on the transform matrix and the depth information of the first image frame and the transform matrix and the depth information of the second image frame by using a 3D playfield motion estimation method

S1004: Determine whether a difference between the optical flow motion vector of the first pixel location in the second image frame and the playfield motion vector of the first pixel is less than a specified threshold 1

No

S1006: Obtain a depth value of the first pixel location and depth values of surrounding pixel locations around the first pixel location in the second image frame

Yes

S1007: Determine whether a difference between the depth value of the first pixel location and depth values of surrounding pixel locations is less than a specified threshold 2

No

Yes

S1005: Use an average of the optical flow motion vector and the playfield motion vector of the first pixel location as a motion vector of the first pixel location

S1008: Use the optical flow motion vector of the first pixel location as a motion vector of the first pixel location

S1009: Use the playfield motion vector of the first pixel location as the motion vector of the first pixel location

S1010: Generate a target image frame based on the first image frame, the second image frame, and the motion vector information between the first image frame and the second image frame

FIG. 10

## INTERNATIONAL SEARCH REPORT

| International application No. |
| --- |
| **PCT/CN2024/109457** |

| A. | CLASSIFICATION OF SUBJECT MATTER |
| --- | --- |

G06T 7/207(2017.01)i

According to International Patent Classification (IPC) or to both national classification and IPC

| B. | FIELDS SEARCHED |
| --- | --- |

Minimum documentation searched (classification system followed by classification symbols)

IPC：G06T

Documentation searched other than minimum documentation to the extent that such documents are included in the fields searched

Electronic data base consulted during the international search (name of data base and, where practicable, search terms used)

VEN, CNABS, CNTXT, WOTXT, USTXT, CNKI, IEEE: 渲染, 运动, 矢量, 估计, 接口, 光流, 3D, 三维, 深度, 矩阵, 像素, 位置, 坐标, rendering, movement, three, dimension, optical, flow, matrix, depth, pixel

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 103888767 A (SHANDONG UNIVERSITY) 25 June 2014 (2014-06-25) description, paragraphs [0019]-[0073] | 1-19 |
| Y | US 2021166441 A1 (NVIDIA CORP.) 03 June 2021 (2021-06-03) description, paragraphs [0060] and [0076]-[0154] | 1-19 |
| A | CN 111291677 A (JILIN UNIVERSITY) 16 June 2020 (2020-06-16) entire document | 1-19 |
| A | CN 107240147 A (TSINGHUA UNIVERSITY) 10 October 2017 (2017-10-10) entire document | 1-19 |
| A | CN 113469930 A (TENCENT TECHNOLOGY (SHENZHEN) CO., LTD.) 01 October 2021 (2021-10-01) entire document | 1-19 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 October 2024** | **23 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/109457**

| Patent document cited in search report | | | Publication date (day/month/year) | Patent family member(s) | | | Publication date (day/month/year) |
|---|---|---|---|---|---|---|---|
| CN | 103888767 | A | 25 June 2014 | None | | | |
| US | 2021166441 | A1 | 03 June 2021 | DE | 102019121200 | A1 | 13 February 2020 |
| | | | | US | 2020051290 | A1 | 13 February 2020 |
| | | | | CN | 110868580 | A | 06 March 2020 |
| | | | | CN | 115379185 | A | 22 November 2022 |
| CN | 111291677 | A | 16 June 2020 | None | | | |
| CN | 107240147 | A | 10 October 2017 | None | | | |
| CN | 113469930 | A | 01 October 2021 | None | | | |

Form PCT/ISA/210 (patent family annex) (July 2022)

**EP 4 756 714 A1**

**Patent documents cited in the description**

- CN 202311161813